# EUROPÄISCHE PATENTSCHRIFT

(11) **EP 3 146 160 B1**
(45) Veröffentlichungstag und Bekanntmachung des Hinweises auf die Patenterteilung: **25.07.2018**
(21) Anmeldenummer: 15730387.6
(22) Anmeldetag: 18.05.2015
(51) Int. Cl.: F01K 3/00, F01K 3/10, F01K 3/14, F01K 3/20, F01K 3/24, F01K 15/02, F01K 23/06

(54) **VERFAHREN ZUR RÜCKGEWINNUNG VON WÄRME AUS VERBRENNUNGSMOTOREN SOWIE ZUR UMWANDLUNG DER RÜCKGEWONNENEN WÄRME IN MECHANISCHE ENERGIE**
METHOD FOR RECOVERING HEAT FROM COMBUSTION ENGINES AND FOR CONVERTING THE RECOVERED HEAT IN MECHANICAL ENERGY
PROCÉDÉ DE RÉCUPÉRATION DE CHALEUR DE MOTEURS À COMBUSTION ET DE CONVERSION DE CHALEUR RÉCUPÉRÉE EN ÉNERGIE MÉCANIQUE

(30) Priorität: 19.05.2014 DE 102014007214
(43) Veröffentlichungstag der Anmeldung: 29.03.2017
(73) Patentinhaber: Fraunhofer-Gesellschaft zur Förderung der angewandten Forschung e.V., 80686 München (DE)
(72) Erfinder: KOLLMEIER, Hans-Peter, 50321 Brühl (DE); KRALJEVIC, Ivica, 74906 Bad Rappenau (DE); ROHRPASSER, Christian, 76646 Bruchsal (DE); STRIEBICH, Helmut, 76227 Karlsruhe (DE)
(74) Vertreter: Lichti - Patentanwälte Partnerschaft mbB
(86) Internationale Anmeldenummer: PCT/EP2015/001012
(87) Internationale Veröffentlichungsnummer: WO 2015/176812

(56) Entgegenhaltungen:
- DE-A1-102010 042 401
- JP-A- H03 018 656

## Beschreibung

Die Erfindung betrifft ein Verfahren zur Rückgewinnung von Wärme aus einem Verbrennungsmotor, insbesondere eines Kraftfahrzeugs, sowie zur Umwandlung der rückgewonnenen Wärme in mechanische Energie mittels einer Expansionsmaschine, wobei ein mittels wenigstens einer Primärpumpe in einem Primärkreislauf geführtes Wärmespeicherfluid mittels wenigstens eines ersten Wärmetauschers durch die Abwärme des Verbrennungsmotors erhitzt, in einen Wärmespeicher überführt und zu dem wenigstens einen ersten Wärmetauscher rezirkuliert wird, und wobei das Wärmespeicherfluid ferner in einem Sekundärkreislauf geführt wird, indem es im dampfförmigen Zustand dem Wärmespeicher entnommen und der Expansionsmaschine zugeführt, stromab der Expansionsmaschine mittels eines Kondensators kondensiert und mittels wenigstens einer Sekundärpumpe in den Wärmespeicher rezirkuliert wird. Die Erfindung bezieht sich ferner auf eine insbesondere zur Durchführung eines solchen Verfahrens geeignete Vorrichtung zur Rückgewinnung von Wärme aus einem Verbrennungsmotor, insbesondere eines Kraftfahrzeugs, sowie zur Umwandlung der rückgewonnenen Wärme in mechanische Energie mittels einer Expansionsmaschine, mit einem Primärkreislauf eines Wärmespeicherfluides, welcher wenigstens einen ersten Wärmetauscher, welcher durch die Abwärme eines Abwärmestroms des Verbrennungsmotors beheizt ist, einen Wärmespeicher und eine den ersten Wärmetauscher mit dem Wärmespeicher verbindende erste Ringleitung mit wenigstens einer Primärpumpe umfasst, und mit einem Sekundärkreislauf des Wärmespeicherfluides, welcher mit dem Primärkreislauf in Verbindung steht und die Expansionsmaschine, einen stromab derselben angeordneten Kondensator und eine zweite Ringleitung mit wenigstens einer Sekundärpumpe umfasst.

Verfahren zur Rückgewinnung der Abwärme aus Verbrennungsmotoren nach Art des Clausius-Rankine-Kreisprozesses sind weitgehend bekannt. Sie kommen beispielsweise in großen Schiffs- und Stationärmotoren zum Einsatz, um ihre Wirtschaftlichkeit sowie ihre Umweltfreundlichkeit durch die hiermit erzielte Energieeinsparung zu verbessern. Darüber hinaus ist die Anwendung derartiger Kreisprozesse in Motoren für Lastkraftwagen erprobt worden, wobei eine Kraftstoffersparnis von bis zu etwa 15% erzielt werden konnte (Rainer Lutz, Peter Geskes, Eberhard Pantow, Jochen Eitel: "Nutzung der Abgasenergie von Nutzfahrzeugen mit dem Rankine-Prozess", MTZ 10/2012). Als nachteilig erwies sich hierbei allerdings vornehmlich einerseits der hohe technische und konstruktive Aufwand in Bezug auf den in dem Kreisprozess für das Wärmespeicherfluid genutzten Verdampfer und Kondensator, andererseits die aufwändige Steuer- und Regeltechnik, weshalb diese Technologie bislang nicht in die Praxis umgesetzt werden konnte. Darüber hinaus ist die in Bezug auf Lastkraftwagenmotoren bekannte Technologie allenfalls bedingt auf Motoren von Personenkraftwagen übertragbar, weil Personenkraftwagen im Gegensatz zu Lastkraftwagen in der Regel mit sehr unterschiedlichen und häufig wechselnden Motorleistungen betrieben werden, so dass die nutzbare Abwärme des Verbrennungsmotors stark variiert, wobei derart instationäre Wärmeströme für die Realisierung der vorgenannten Rankine-Prozesse gemäß dem Stand der Technik regelungstechnisch kaum beherrschbar sind. Andererseits werden im Falle eines erzwungenermaßen kontinuierlichen Betriebs eines solchen Rankine-Prozesses die erreichbaren Wirkungsgrade sehr gering. Indes besteht sowohl aus ökonomischen als auch aus ökologischen Gründen durchaus ein Bedarf, auch bei Personenkraftwagen (z.B. im Stadtverkehr, wo sich aufgrund der häufigen Lastwechsel ein maximaler Kraftstoffverbrauch ergibt) durch eine Nutzung der Abwärme des Verbrennungsmotors für eine Kraftstoffeinsparung zu sorgen (Dr. Raymond Freymann: "Der Turbostreamer der zweiten Generation", MTZ 02/2012).

Die DE 10 2011 105 709 A1 beschreibt ein gattungsgemäßes Verfahren und eine Vorrichtung zur Rückgewinnung von Wärme aus einem Verbrennungsmotor eines Kraftfahrzeugs sowie zur Umwandlung der rückgewonnenen Wärme in mechanische Energie mittels einer Expansionsmaschine, indem ein in einem Arbeits- bzw. Sekundärkreislauf geführtes Wärmespeicherfluid mittels eines aus der Abwärme des Motors gespeisten Wärmetauschers in Form eines Verdampfers verdampft und der erzeugte Dampf einer mit dem Motor gekoppelten Expansionsmaschine zugeführt wird, welche die thermische Energie in mechanische Energie umwandelt. Der Abdampf wird stromab der Expansionsmaschine mittels eines Kondensators kondensiert, mittels des Verdampfers verdampft und erneut der Expansionsmaschine zugeführt. Um auch bei einem instationären Betrieb des Verbrennungsmotors mit variierenden Abwärmeströmen für einen verbesserten Wirkungsgrad des Antriebssystems zu sorgen, sieht die Druckschrift vor, dass der Arbeits- bzw. Sekundärkreislauf über ein Mehrwegeventil mit einem Primärkreislauf des Wärmespeicherfluides in Verbindung steht, welcher einen Dampfspeicher für das mittels des Verdampfers verdampfte Wärmespeicherfluid umfasst, so dass im Falle einer temporär nicht benötigten Antriebsleistung der Expansionsmaschine das dampfförmige Wärmespeicherfluid einerseits zwischengespeichert, anderseits bedarfsweise entnommen und an die Expansionsmaschine abgegeben werden kann, sofern eine erhöhte Leistung zur Verfügung stehen soll.

Ein Nachteil besteht einerseits darin, dass sich die mittels des Dampfspeichers speicherbare thermische Energie als relativ gering erweist, sofern der Dampfspeicher nicht ein sehr großes Fassungsvermögen aufweist, welches den verfügbaren Laderaum des Kraftfahrzeugs beansprucht und zudem auch im Hinblick auf die notwendige thermische Isolierung des Dampfspeichers ein erhebliches Zusatzgewicht verursacht, welches wiederum in einem erhöhten Kraftstoffverbrauch resultiert. Folglich vermag der in dem Dampfspeicher gespeicherte Dampf einerseits nur kurze Lastphasen des Motors zu überbrücken, wenn er der Expansionsmaschine zugeführt wird, andererseits lässt sich in Phasen eines theoretischen Überschusses an zur Verfügung stehender Abwärme aus dem Verbrennungsmotor nur ein geringer Teil derselben in dem Dampfspeicher speichern. Darüber hinaus erfordert die in der DE 10 2011 105 709 A1 vorgeschlagene Integration des Verdampfers in den Arbeits- bzw. Sekundärkreislauf (d.h. das mittels des Verdampfers verdampfte Wärmespeicherfluid wird im Normalbetrieb direkt der Expansionsmaschine zugeführt) insbesondere einen erheblichen steuer- und regelungstechnischen Aufwand, weil die zu verdampfende Menge an dem Wärmespeicherfluid stets an den gerade zur Verfügung stehenden Abwärmestrom des Verbrennungsmotors angepasst werden muss. Die Steuer- und Regeltechnik hat dabei überdies einer Vielzahl an Betriebszuständen Rechnung zu tragen hat, in Abhängigkeit derer die Primär- und Sekundärkreisläufe des Wärmespeicherfluides mittels des Mehrwegeventils in unterschiedlicher Weise umgeleitet werden müssen.

In der JP H03-018656 A geht es um ein weiteres Verfahren zur Rückgewinnung der Wärme aus Verbrennungsmotoren von Kraftfahrzeugen, wobei die rückgewonnene Wärme mittels einer Expansionsmaschine in mechanische Energie umgewandelt wird. Dabei wird ein mittels einer Pumpe zirkuliertes Wärmespeicherfluid mittels eines Wärmetauschers des Kühlwasserkreislaufs durch die Abwärme des Verbrennungsmotors erhitzt, in eine Art Wärmespeicher überführt und zu dem Wärmetauscher des Kühlwasserkreislaufs rezirkuliert. Ferner ist vorgesehen, dass ein Teilstrom des Wärmespeicherfluides in einem Abzweigkreislauf geführt wird, indem es im dampfförmigen Zustand dem Wärmespeicher entnommen und einer Niedriglaststufe der Expansionsmaschine zugeführt, stromab der Expansionsmaschine mittels eines Kondensators kondensiert und mittels einer weiteren Pumpe in den Wärmespeicher rezirkuliert wird. Alternativ wird das Wärmespeicherfluid dem Wärmespeicher in der Flüssigphase entnommen, mittels eines Abgas-Wärmetauschers verdampft und direkt einer Hochleistungsstufe der Expansionsmaschine zugeführt.

Die WO 2012/074456 A1 beschreibt ebenfalls ein Verfahren sowie eine Vorrichtung zur Rückgewinnung von Wärme von Verbrennungsmotoren von Kraftfahrzeugen sowie zur Umwandlung der rückgewonnenen Wärme in mechanische Energie mittels einer Expansionsmaschine, wobei ein Wärmespeichermedium in Form einer zeotropen Kühlmittelmischung in mehreren Kreisläufen mit einem Abscheider geführt wird. In einem ersten Kreislauf wird die Kühlmittelmischung in einem mit Abwärme aus dem Motor betriebenen Verdampfer verdampft und in den Abscheider überführt, von wo die dampfförmige Phase der niedersiedenden Kühlmittelkomponente über einen Zusatzheizer der Expansionsmaschine zugeführt und über einen Wärmetauscher sowie einen Kondensator rezirkuliert wird. In einem zweiten Kreislauf wird dem Abscheider die flüssige Phase der hochsiedende Kühlmittelkomponente entnommen und - wiederum über den Wärmetauscher und den Kondensator - an den Verdampfer überführt, von wo aus sie über den Zusatzheizer an die Expansionsmaschine oder zurück in den Abscheider gelangen kann.

Davon abgesehen, dass einerseits der Wärmespeicher gemäß der oben zitierten JP H03-018656 A nur einen sehr geringen Anteil der zur Verfügung stehenden Wärme zu speichern vermag (nämlich nur die aus dem Kühlwasserkreislauf über den Wärmetauscher des Kühlmittelkreislaufs entnommene Wärme, die lediglich zum Betrieb der Expansionsmaschine in der Niedrigleistungsstufe mittels des aus der Gasphase des Wärmespeichers abgeführten Wärmespeichermedium dient, während der Abgas-Wärmetauscher der Expansionsmaschine unmittelbar vorgeordnet ist), andererseits auch der Abscheider gemäß der vorzitierten WO 2012/074456 A1 - sofern er überhaupt (auch) als "Wärmespeicher" dient - gleichfalls einen nur sehr geringen Anteil der zur Verfügung stehenden Wärme speichern kann (nämlich ausschließlich für einen Niedriglastzustand, in welchem dem Gasraum des Abscheiders die gasförmige Phase der niedrigsiedenden Kühlmittelkomponente entnommen und über ein Ventil und den Zusatzheizer der Expansionsmaschine zugeführt wird, wohingegen in einem Hochlastzustand dem Abscheider nur kaltes, flüssiges Kühlmittel über ein weiteres Ventil entnommen wird, um es mittels des Wärmetauschers und des Verdampfers erst zu erhitzen), erweist sich bei beiden bekannten Verfahren wiederum insbesondere der sehr hohe Steuer- und Regelaufwand als nachteilig, welcher sich nach den jeweiligen Betriebszuständen zu richten hat, wobei die bei Verbrennungsmotoren in aller Regel sehr instationär anfallende Wärme aus den oben genannten Gründen nicht wirksam gespeichert werden kann.

Der Erfindung liegt daher die Aufgabe zugrunde, ein Verfahren und eine Vorrichtung zur Rückgewinnung von Wärme aus einem Verbrennungsmotor, insbesondere eines Kraftfahrzeugs, sowie zur Umwandlung der rückgewonnenen Wärme in mechanische Energie mittels einer Expansionsmaschine der eingangs genannten Art auf einfache und kostengünstige Weise dahingehend weiterzubilden, dass den vorgenannten Nachteilen zumindest teilweise begegnet werden kann.

In verfahrenstechnischer Hinsicht wird diese Aufgabe erfindungsgemäß bei einem Verfahren der eingangs genannten Art dadurch gelöst, dass der Primärkreislauf des Wärmespeicherfluides ausschließlich über den Wärmespeicher mit dem Sekundärkreislauf verbunden und im Übrigen von diesem getrennt wird.

In vorrichtungstechnischer Hinsicht sieht die Erfindung zur Lösung dieser Aufgabe bei einer Vorrichtung der eingangs genannten Art ferner vor, dass der Primärkreislauf des Wärmespeicherfluides ausschließlich über den Wärmespeicher mit dem Sekundärkreislauf in Verbindung steht und im Übrigen von diesem getrennt ist.

Die erfindungsgemäße Ausgestaltung sieht folglich vor, dass der zur "Aufladung" des Wärmespeichers dienende Primärkreislauf des Wärmespeicherfluides während des Betriebs vollständig von dem zum Antrieb der Expansionsmaschine dienenden Sekundärkreislauf des Wärmespeicherfluides getrennt ist und die beiden Kreisläufe ausschließlich über den Wärmespeicher miteinander verbunden sind, letzterer folglich die einzige Schnittstelle zwischen dem Primär- und dem Sekundärkreislauf bildet. Aufgrund dieser erfindungsgemäßen Trennung der Kreisläufe voneinander kann die Expansionsmaschine während des Betriebs stets mit dem aus dem Gasraum des Wärmespeichers abgezogenen Wärmespeicherfluid in dem Sekundärkreislauf gespeist werden, während zumindest der größte Teil der Energiezufuhr an den Wärmespeicher hiervon unabhängig über den Primärkreislauf geschieht, nachdem dem Wärmespeicherfluid in dem ersten Wärmetauscher die Abwärme des Verbrennungsmotors zugeführt worden ist. Der häufig instationär anfallende Abwärmestrom des Verbrennungsmotors kann folglich fortwährend und unabhängig von seiner aktuellen Wärmemenge bestmöglich zur "Aufladung" des Wärmespeichers genutzt werden, ohne den Betrieb der Expansionsmaschine über den Sekundärkreislauf zu beeinflussen, ohne dass eine aufwändige Steuer- und/oder regelungstechnische Anpassung eines Verdampfers erforderlich wäre, wie es bei dem eingangs erwähnten Stand der Technik der Fall ist, demgemäß stets zumindest ein Teil des Wärmespeicherfluides in einem als Verdampfer ausgebildeten Wärmetauscher verdampft und der Expansionsmaschine direkt zugeführt wird, insbesondere dann, wenn diese mit hoher Leistung betrieben werden soll. Andererseits können der Expansionsmaschine erfindungsgemäß über den Sekundärkreislauf des Wärmespeicherfluides quasi stationäre Dampfzustände des Wärmespeichermediums aus dem Wärmespeicher angeboten werden, damit stets ein Betrieb der Expansionsmaschine in ihrem optimalen Auslegungsbereich ermöglicht werden kann, ohne dass auch hierfür eine aufwändige, von dem jeweiligen Abwärmestrom und folglich von dem jeweiligen Betriebszustand des Verbrennungsmotors abhängige Regelung erforderlich wäre.

In vorteilhafter Ausgestaltung des erfindungsgemäßen Verfahrens kann vorgesehen sein, dass das Wärmespeicherfluid in dem Wärmespeicher zumindest überwiegend im flüssigen Zustand gehalten wird, so dass der überwiegende Anteil der im Wärmespeicher gespeicherten Wärme in dem im Wärmespeicher im flüssigen Zustand vorliegenden Wärmespeicherfluid gespeichert wird. In vorrichtungstechnischer Hinsicht kann zu diesem Zweck vorgesehen sein, dass der Wärmespeicher als Druckbehälter ausgebildet ist, dessen Innendruck
- mittels wenigstens eines stromab desselben in dem Sekundärkreislauf angeordneten Drucksteuer- und/oder -regelventils; und/oder
- mittels der in dem Sekundärkreislauf angeordneten, drucksteuer- und/oder -regelbaren Sekundärpumpe; und/oder
- mittels einer Drucksteuerung und/oder -regelung der Expansionsmaschine, welche die Druckabnahme des sie durchsetzenden Wärmespeicherfluides steuert und/oder regelt,
   steuerbar und/oder regelbar ist.

Eine solche Ausführungsform, dergemäß das in dem Wärmespeicher gespeicherte und als Arbeitsmittelmedium dienenden Wärmespeicherfluid, z.B. eines solchen auf der Basis von Wasser, eines Alkohols, wie Ethanol, n- und/oder iso-Propanol etc., eines halogenierten Kohlenwasserstoffes oder dergleichen, vornehmlich im flüssigen Zustand vorliegt, sieht folglich einen Betrieb des Wärmespeichers nach Art eines sogenannten Ruthsspeichers vor, in welchem sich oberhalb des Flüssigkeitsspiegels des Wärmespeicherfluides eine Dampfphase desselben befindet, welche der Expansionsmaschine zugeführt werden kann. Wird dem Wärmespeicher demnach dampfförmiges Wärmespeicherfluid über den Gasraum entnommen und über den Sekundärkreislauf in die Expansionsmaschine eingespeist, so setzt eine Nachverdampfung seines in flüssiger Phase befindlichen Hauptanteils (in Bezug aus seine Gesamtmasse an flüssiger und gasförmiger Phase) ein, wobei die zur Nachverdampfung erforderliche Wärme der flüssigen Phase entzogen wird. Der Druck und die Temperatur in dem Wärmespeicher sinken folglich ab, was durch die Zufuhr von frischem, mittels des ersten Wärmetauschers erhitztem Wärmespeicherfluid aus dem von dem Sekundärkreislauf getrennten Primärkreislauf kompensiert wird. Da die auf diese Weise dem Wärmespeicher entnehmbare Dampfmenge aufgrund der deutlich erhöhten volumetrischen Energiedichte des flüssigen Wärmespeichermediums erheblich größer ist als bei einem herkömmlichen Dampfspeicher, vermag der Wärmespeicher bei einem demgegenüber sehr kleinen Volumen eine deutlich, z.B. etwa um den Faktor 15, größere Wärmemenge zu speichern und bedarfsweise zur Verfügung zu stellen, um auch langwährende Lastphasen zu überbrücken und gegebenenfalls insbesondere auch einen vorübergehenden Betrieb des Kraftfahrzeugs bei ausgeschaltetem Verbrennungsmotor rein mittels der von der Expansionsmaschine erzeugten mechanischen Energie zu gewährleisten, welche wiederum ausschließlich durch Umwandlung der in dem Wärmespeicher gespeicherten thermischen Energie des Wärmespeichermediums resultiert. In Verbindung mit der ausschließlichen Verbindung des Primärkreislaufs mit dem Sekundärkreislauf mittels des Wärmetauscher während des Betriebs kann folglich eine zeitlich und mengenmäßig bedarfsorientierte, d.h. an den jeweiligen Lastzustand des Verbrennungsmotors angepasste, Entnahme von dampfförmigem Wärmespeicherfluid aus dem oberhalb des Flüssigkeitsspiegels angeordneten Gasraum des Wärmespeichers zum Antrieb der Expansionsmaschine gewährleistet werden, so dass letztere weitestgehend unabhängig von dem häufig instationär anfallenden Abwärmestrom des Verbrennungsmotors betrieben werden kann, wobei die Expansionsmaschine auf diese Weise mit einem quasi stationären Dampfstrom des Wärmespeicherfluides aus dem Wärmespeicher gespeist werden kann, um stets für einen Betrieb derselben in ihrem optimalen Auslegungsbereich zu ermöglichen. Der Wärmespeicher vermag folglich als eine Art "Puffer" zu dienen, welcher die Wärmemengenschwankungen in dem instationären Abwärmestrom (aus dem Primärkreislauf) stets dadurch auffangen kann, indem flüssiges Wärmespeicherfluid verdampft oder gasförmiges Wärmespeicherfluid kondensiert wird, wobei im Gasraum des Wärmespeichers gleichwohl stets gasförmiges, mehr oder minder im Gleichgewicht mit der Flüssigphase stehendes Wärmespeicherfluid zur Verfügung steht, welches an die Expansionsmaschine überführt werden kann. Aufgrund der konstruktiven Ausgestaltung des Wärmespeichers als Druckbehälter mit einem stromab desselben angeordneten Drucksteuer- und/oder -regelventil, einer in dem Sekundärkreislauf angeordneten, drucksteuer- und/oder -regelbaren Sekundärpumpe und/oder einer Drucksteuerung und/oder -regelung der Expansionsmaschine, welche die Druckabnahme des sie durchsetzenden Wärmespeicherfluides steuert und/oder regelt und insbesondere die maximale Druckabnahme des Wärmespeicherfluides stromab gegenüber stromauf der Expansionsmaschine zu begrenzen vermag, kann in dem Wärmespeicher stets der bei der jeweiligen Temperatur des dort gespeicherten Wärmespeicherfluides erforderliche Druck eingestellt werden, damit dieses zumindest überwiegend in der flüssigen bzw. kondensierten Phase vorliegt.

Demnach kann in vorteilhafter Ausgestaltung des erfindungsgemäßen Verfahrens vorgesehen sein, dass das Wärmespeicherfluid in dem Wärmespeicher dadurch zumindest überwiegend im flüssigen Zustand gehalten wird, indem der Wärmespeicher
- mittels wenigstens eines stromab desselben in dem Sekundärkreislauf angeordneten Drucksteuer- und/oder -regelventils; und/oder
- mittels der in dem Sekundärkreislauf angeordneten, drucksteuer- und/oder -regelbaren Sekundärpumpe; und/oder
- mittels einer Drucksteuerung und/oder -regelung der Expansionsmaschine, welche die Druckabnahme des sie durchsetzenden Wärmespeicherfluides steuert und/oder regelt,
auf einem Druck gehalten wird, bei welchem der überwiegende Anteil des im Wärmespeicher befindlichen Wärmespeicherfluides im flüssigen Zustand vorliegt.

In weiterhin vorteilhafter Ausgestaltung des erfindungsgemäßen Verfahrens kann in diesem Zusammenhang vorgesehen sein, dass das Wärmespeicherfluid in dem Wärmespeicher im Wesentlichen in einem unterkritischen thermodynamischen Gleichgewicht zwischen seinem flüssigen Zustand und seinem Dampfzustand gemäß einer der Isobaren zwischen der Siedelinie (untere Grenzlinie) und der Taulinie (obere Grenzlinie) in seinem Temperatur-Entropie-Diagramm (T,s-Diagramm) bei der jeweiligen, in dem Wärmespeicher herrschenden Temperatur gehalten wird. Dadurch, dass sich das in dem Wärmespeicher befindliche Wärmespeicherfluid vorzugsweise im Bereich seines thermodynamischen Gleichgewichtes befindet (d.h. die seinen massenmäßigen Hauptanteil bildende flüssige Phase befindet sich im Wesentlichen in einem Zustand auf der Siedelinie bzw. auf der unteren (linken) Grenzlinie des T,s-Diagramms, während sich seine mit der flüssigen Phase im Gleichgewicht stehende Dampfphase in einem Zustand auf der Taulinie bzw. auf der oberen (rechten) Grenzlinie des T,s-Diagramms befindet), wird bei einer hohen volumetrischen Energiedichte des Wärmespeichermediums erreicht, dass bei der Entnahme des dampfförmigen Wärmespeicherfluides aus dem Energiespeicher, um es im Sekundärkreislauf der Expansionsmaschine zuzuführen, der partielle Druck des Wärmespeicherfluides in dem Energiespeicher abgesenkt wird, wodurch das dort vornehmlich in flüssiger Phase vorliegende Wärmespeicherfluid unter Abnahme seiner inneren Energie (Druck und Temperatur sinken ab) nachverdampft wird, so dass es auch dann fortwährend, insbesondere in Form von Sattdampf, zur Verfügung steht, wenn dem Wärmespeicher über den Primärkreislauf mangels eines hinreichenden Abwärmestromes des Verbrennungsmotors gerade kein Wärmespeicherfluid mit einer zur Kompensation des inneren Energieverlustes hinreichenden Wärmemenge zugeführt werden kann. Die dem Wärmespeicher durch das im Primärkreislauf geführte Wärmespeicherfluid zugeführte Wärme, welche an letzteres über den wenigstens einen, nach Art eines "Durchlauferhitzers" arbeitenden ersten Wärmetauscher übertragen wird, führt dabei insbesondere zur Erhöhung des Wärmeenergiegehaltes des Wärmespeicherfluides im flüssigen bzw. kondensierten Zustand, wobei das Wärmespeicherfluid nach dem Passieren des ersten Wärmetauschers je nach dem temporär vorliegenden Abwärmeangebot des Verbrennungsmotors in flüssiger, teilweise oder gänzlich verdampfter Form vorliegen kann, wobei es im letztgenannten Fall zumindest größtenteils beim (Wieder)eintritt in den Wärmespeicher infolge des dort eingestellten Druckes kondensiert wird, um es im vornehmlich flüssigen Zustand im Wärmespeicher auf Vorrat zu halten und über einen langen Zeitraum in den Gasraum des Wärmespeichers nachverdampfen zu können, um es über den Sekundärkreislauf in die Expansionsmaschine einzuspeisen. Zudem ergibt sich im Falle eines Betriebs des Wärmespeichers im Siedebereich des Wärmespeicherfluides der Vorteil einer besseren Wärmeübertragung und somit einer verbesserten Einbindung des Abwärmestromes des Verbrennungsmotors in das im Kreislauf zirkulierte Wärmespeicherfluid, wobei der wenigstens eine erste Wärmetauscher nicht die Funktion eines Verdampfers besitzen muss, wenngleich das Wärmespeicherfluid insbesondere bei einem sehr hohen, zur Verfügung stehenden Abwärmestrom in dem ersten Wärmetauscher selbstverständlich auch zumindest teilweise verdampft werden kann, wonach es beim Eintritt in den Wärmespeicher infolge dessen Drucksteuerung und/oder -regelung - sei es über die Expansionsmaschine oder sei es insbesondere über das Drucksteuer- und/oder -regelventil im Sekundärkreislauf stromab des Wärmespeichers und/oder über die Sekundärpumpe im Sekundärkreislauf stromauf des Wärmespeichers - wieder kondensiert wird.

Wie bereits angedeutet, macht es die erfindungsgemäße Trennung des Primär- von dem Sekundärkreislauf des Wärmespeicherfluides insbesondere möglich, dass die Expansionsmaschine ausschließlich mit dem im dampfförmigen Zustand befindlichen Wärmespeicherfluid aus dem Wärmespeicher gespeist wird. In vorrichtungstechnischer Hinsicht kann demnach vorzugsweise vorgesehen sein, dass die im Sekundärkreislauf angeordnete Expansionsmaschine ausschließlich mittels der zweiten Ringleitung mit dem Wärmespeicher verbunden ist. Folglich wird die Expansionsmaschine während des Betriebs stets ausschließlich mit dem aus dem Gasraum des Wärmespeichers abgezogenen, dampfförmigen Wärmespeicherfluid in dem Sekundärkreislauf gespeist, während die Energiezufuhr an den Wärmespeicher vornehmlich (aber, wie weiter unten noch näher erläutert, vorzugsweise nicht ausschließlich) über den Primärkreislauf geschieht, nachdem dem Wärmespeicherfluid in dem wenigstens einen ersten Wärmetauscher Abwärme des Verbrennungsmotors zugeführt worden ist.

Um die Abwärme des Verbrennungsmotors bestmöglich zu nutzen und das Wärmespeicherfluid auch im Sekundärkreislauf vor seiner Rückführung in den Wärmespeicher nicht auf eine zu tiefe Temperatur abkühlen zu lassen, wird das Wärmespeicherfluid vorzugsweise auch in dem Sekundärkreislauf stromab des Kondensators mittels wenigstens eines Wärmetauschers durch die Abwärme des Verbrennungsmotors erhitzt, bevor es in den Wärmespeicher rezirkuliert wird. In vorrichtungstechnischer Hinsicht kann zu diesem Zweck vorzugsweise vorgesehen sein, dass der Sekundärkreislauf wenigstens einen zweiten Wärmetauscher umfasst, welcher durch die Abwärme des Verbrennungsmotors beheizt und stromab des Kondensators angeordnet ist, wobei der wenigstens eine zweite Wärmetauscher insbesondere in einem Restwärmestrom des Verbrennungsmotors stromab des wenigstens einen ersten Wärmetauschers angeordnet ist. Folglich kann dem Abwärmestrom auch bei verhältnismäßig niedrigen Temperaturen des Abwärmestromes des Verbrennungsmotors praktisch die gesamte, wiedergewinnbare Restwärme entzogen werden, um das Wärmespeicherfluid in dem Sekundärkreislauf vorzuwärmen, bevor es in den Wärmespeicher gelangt.

Während das Wärmespeicherfluid in dem Sekundärkreislauf grundsätzlich auch mittels des wenigstens einen ersten Wärmetauschers erhitzt werden kann, welcher in diesem Fall z.B. drei Wärmetauschleitungen umfasst (wie einerseits für den Abgasstrom, andererseits für den Primär- und den hiervon getrennten Sekundärkreislauf des Wärmespeicherfluides), kann das Wärmespeicherfluid in dem Sekundärkreislauf - wie oben angedeutet - in bevorzugter Ausführung mittels wenigstens eines zweiten Wärmtauschers erhitzt werden, welcher insbesondere durch die Restwärme des Verbrennungsmotors betrieben wird, nachdem dessen Abwärme mittels des wenigstens einen ersten Wärmetauschers dem im Primärkreislauf geführten Wärmespeicherfluid zugeführt worden ist. Auf diese Weise kann dem Abwärmestrom des Verbrennungsmotors die größtmögliche Wärmemenge entzogen werden, ohne dass es zu erheblichen Verlusten entsprechend den herkömmlichen Durchlaufverdampfern gemäß dem Stand der Technik kommt. Dies macht sich vor allem bei verhältnismäßig niedrigen Abgastemperaturen, wie sie gerade bei Verbrennungsmotoren von Kraftfahrzeugen häufig vorliegen, bezüglich eines optimalen Wirkungsgrades positiv bemerkbar.

Der in dem Sekundärkreislauf positionierte Kondensator kann beispielsweise mit Umgebungsluft, mit einem Kühlmedium des Verbrennungsmotors oder mit einem anderen Kühlmediumkreislauf eines Kraftfahrzeugs versorgt werden bzw. versorgt sein, um das Wärmespeicherfluid in dem Sekundärkreislauf stromab der Expansionsmaschine zu kondensieren.

In vorteilhafter Ausgestaltung kann in diesem Zusammenhang vorgesehen sein, dass der Kondensator mit einem Kühlmedium, insbesondere des Verbrennungsmotors, versorgt wird, wobei das Kühlmedium bedarfsweise, insbesondere während Aufwärmphasen des Verbrennungsmotors, durch das Wärmespeicherfluid erwärmt wird. Die Wärmeabfuhr in dem Kondensator kann beispielsweise über den Kühlkreislauf des Verbrennungsmotors oder über andere geeignete Kühlkreisläufe des Kraftfahrzeugs oder auch direkt an die Umgebungsluft erfolgen. Sofern der Kondensator in den Kühlkreislauf des Verbrennungsmotors eingebunden und mit dem Kühlmedium des Verbrennungsmotors versorgt ist, kann folglich insbesondere das Kaltstartverhalten des Verbrennungsmotors verbessert bzw. seine Warmlaufphase verkürzt werden, indem das Kühlmedium durch die (Rest)wärme des in dem Wärmespeicher bevorrateten und in dem Sekundärkreislauf geführten Wärmespeichermediums vorgewärmt wird. Die Aufwärmphasen des Verbrennungsmotors lassen sich somit so lange in wirksamer Weise verkürzen, wie in dem Wärmespeicher noch (Rest)wärme zur Verfügung steht.

In diesem Zusammenhang kann gemäß einer vorteilhaften Weiterbildung vorgesehen sein, dass zur bedarfsweisen Erwärmung des Kühlmediums das Wärmespeichermedium in dem Sekundärkreislauf über eine Bypassleitung an der Expansionsmaschine vorbei direkt dem Kondensator zugeführt wird. In vorrichtungstechnischer Hinsicht kann der Sekundärkreislauf zu diesem Zweck eine mit einem Sperrventil, insbesondere in Form eines Drucksteuer- und/oder -regelventils, ausgestattete Bypassleitung aufweisen, welche die Expansionsmaschine bypasst und den Wärmespeicher über die zweite Ringleitung bedarfsweise unmittelbar mit dem Kondensator verbindet. Auf diese Weise kann das Wärmespeicherfluid in seinem Sekundärkreislauf an der Expansionsmaschine vorbei direkt dem Kondensator zugeführt werden, wo es unter Kondensation desselben seine Wärme an das Kühlmedium, z.B. des Verbrennungsmotors, überträgt, um letzteren schnell auf seine Betriebstemperatur zu bringen. Indes ist es selbstverständlich auch denkbar, dass eine derartige Vorwärmung des Kühlmediums mittels des Kondensators durch das im Sekundärkreislauf geführte Wärmespeichermedium durchgeführt wird, welches die Expansionsmaschine bereits passiert hat (also nach einem gewissen, mit der Entspannung einhergehenden Temperaturverlust), ohne diese zu umgehen bzw. zu bypassen.

In weiterhin vorteilhafter Ausgestaltung des erfindungsgemäßen Verfahrens kann vorgesehen sein, dass das kondensierte Wärmespeicherfluid in dem Sekundärkreislauf stromab des Kondensators in einem Pufferbehälter zwischengespeichert wird, von welchem es mittels der Sekundärpumpe in den Wärmespeicher rezirkuliert wird. In vorrichtungstechnischer Hinsicht kann der Sekundärkreislauf zu diesem Zweck einen stromab des Kondensators und zweckmäßiger stromauf des vorzugsweise vorgesehenen zweiten Wärmetauschers angeordneten Pufferbehälter für das Wärmespeicherfluid aufweisen. Auf diese Weise ist es möglich, das in dem Sekundärkreislauf geführte Wärmespeicherfluid stromab des Kondensators zwischenzuspeichern und je nach dem temporär zur Verfügung stehenden Abwärmestrom des Verbrennungsmotors und dem thermodynamischen Zustand des Wärmespeicherfluides in dem Wärmespeicher in diesen zu rezirkulieren.

Gemäß einer vorteilhaften Weiterbildung des erfindungsgemäßen Verfahrens kann vorgesehen sein, dass der wenigstens eine erste Wärmetauscher und/oder der wenigstens eine zweite Wärmetauscher von der Ab- bzw. Restwärme des Verbrennungsmotors entkoppelt wird/werden, wenn
- der Wärmespeicher bei einer maximalen Temperatur seinen maximalen Druck erreicht hat; und/oder
- der Wärmespeicher seine maximale Füllmenge mit dem Wärmespeicherfluides erreicht hat; und/oder
- das in dem Sekundärkreislauf zirkulierte Wärmespeicherfluid in dem Kondensator infolge der dort abgeführten Wärme nicht mehr kondensiert werden kann.
In vorrichtungstechnischer Hinsicht kann zu diesem Zweck vorzugsweise vorgesehen sein, dass der Ab- bzw. Restwärmestrom des Verbrennungsmotors mittels eines mit einem Ventil versehenen Abzweigs
- von dem wenigstens einen ersten Wärmetauscher und/oder
- von dem wenigstens einen zweiten Wärmetauscher trennbar ist, um den ersten Wärmetauscher und/oder den zweiten Wärmetauscher bedarfsweise zu bypassen. Auf diese Weise kann eine (lokale) Überhitzung des Wärmespeicherfluides sowie der Komponenten seines Primär- und Sekundärkreislaufes zuverlässig verhindert werden, indem der Ab- bzw. Restwärmestrom des Verbrennungsmotors an dem ersten und/oder zweiten Wärmetauscher vorbeigeführt wird.

Darüber hinaus kann gemäß einer Weiterbildung des erfindungsgemäßen Verfahrens vorgesehen sein, dass das aus dem Wärmespeicher im dampfförmigen Zustand in den Sekundärkreislauf eingespeiste Wärmespeicherfluid bedarfsweise stromauf der Expansionsmaschine überhitzt wird, wobei das Wärmespeicherfluid insbesondere
- mittels wenigstens eines dritten Wärmetauschers, welcher bedarfsweise mit einem Abwärmestrom des Verbrennungsmotors gespeist wird, oder
- mittels eines Brenners, welcher insbesondere an die Kraftstoffversorgung des Verbrennungsmotors angeschlossen ist,
bedarfsweise überhitzt wird. In vorrichtungstechnischer Hinsicht kann es sich zu diesem Zweck anbieten, dass der Sekundärkreislauf stromab des Wärmespeichers und stromauf der Expansionsmaschine
- einen dritten Wärmetauscher, welcher bedarfsweise an einen Abwärmestrom des Verbrennungsmotor anschließbar ist, oder
- einen Brenner, welcher insbesondere an die Kraftstoffversorgung des Verbrennungsmotors angeschlossen ist,
aufweist. Auf diese Weise kann während des Betriebs, z.B. wenn zeitweise eine besonders hohe Leistung des Kraftfahrzeugs erwünscht ist (beispielsweise anlässlich einer hohen Beschleunigung), der dem Wärmespeicher aus seiner Gasphase entnommene Dampf des Wärmespeicherfluides überhitzt werden, wodurch die Leistung der Expansionsmaschine erhöht werden kann, so dass die von dieser erzeugte (erhöhnte) mechanische Energie für einen solchen Betriebszustand genutzt werden kann.

Der erste Wärmetauscher und/oder der zweite Wärmetauscher und gegebenenfalls der dritte Wärmetauscher kann bzw. können im Übrigen zweckmäßig von einem Abgasstrom des Verbrennungsmotors gespeist werden bzw. gespeist sein. Eine den Abgasstrom führende Abgasleitung sollte hierbei zweckmäßigerweise thermisch isoliert sein, was selbstverständlich auch für die übrigen Komponenten des Primär- und Sekundärkreislaufes des Wärmespeichermediums und im Besonderen für den Wärmespeicher selbst gilt, welcher möglichst adiabatisch ausgestaltet sein und über eine gute Wärmedämmung bzw. -isolierung verfügen sollte, um die Wärmeverluste an die Umgebung zu minimieren. Der Wärmespeicher kann hierbei z.B. mehrwandig ausgebildet sein und eine Vakuumisolierung besitzen und/oder mit latentwärmespeicherfähigem Material ausgestattet sein, so dass die Wärme des Wärmespeicherfluides auch über einen oder mehrere Tage ohne nennenswerte Dissipation in die Umgebung bevorratet werden kann. Eine solche thermische Isolierung des Wärmespeichers weist also vorzugsweise eine mehrlagige Wandung auf, in deren Zwischenraum Unterdruck oder Vakuum herrscht oder ein Aerogel oder ein thermochemisches Speichermedium aufgenommen ist.

Im Übrigen kann es sich aus den weiter oben genannten Gründen hinsichtlich einer hohen Energiedichte des in dem Wärmespeicher bevorrateten Wärmespeicherfluides anbieten, dass die Menge an in dem Primärkreislauf und in dem hiervon getrennten Sekundärkreislauf zirkuliertem Wärmespeicherfluid derart gewählt wird, dass zumindest bei einem maximal möglichen Füllstand des Wärmespeicherfluides in dem Wärmespeicher (der Wärmespeicher ist gänzlich "aufgeladen") wenigstens 50%, insbesondere wenigstens 70%, vorzugsweise wenigstens 90%, des in dem Wärmespeicher zur Verfügung stehenden Volumens mit im flüssigen Zustand befindlichem Wärmespeicherfluid befüllt sind, während das verbleibende Volumen des Wärmespeichers mit in der Gasphase befindlichem Wärmespeicherfluid befüllt ist, welches unter einem entsprechenden Druck steht.

Schließlich kann in vorteilhafter Ausgestaltung des erfindungsgemäßen Verfahrens vorgesehen sein, dass
- zumindest ein Teil der mittels der Expansionsmaschine gewonnenen mechanischen Energie, insbesondere unter Zwischenschaltung eines Getriebes, an den Antriebsstrang des Kraftfahrzeugs abgegeben wird; und/oder
- zumindest ein Teil der mittels der Expansionsmaschine gewonnenen mechanischen Energie an einen der Expansionsmaschine nachgeordneten Stromgenerator abgegeben wird, dessen hieraus erzeugter Strom in die Stromversorgung des Kraftfahrzeugs eingespeist wird.
In vorrichtungstechnischer Hinsicht kann demnach vorzugsweise vorgesehen sein, dass
- die Expansionsmaschine, insbesondere unter Zwischenschaltung eines Getriebes, an den Antriebsstrang des Kraftfahrzeugs angeschlossen ist, und/oder
- die Expansionsmaschine an einen dieser nachgeordneten Stromgenerator angeschlossen ist, welcher mit der Stromversorgung des Kraftfahrzeugs in Verbindung steht.
Folglich kann die von der Expansionsmaschine aus der Abwärme des Verbrennungsmotors erzeugte mechanische Energie einerseits direkt zum Antrieb des Kraftfahrzeugs verwendet werden, sei es zur Unterstützung des Verbrennungsmotors oder sei es alternativ unter Stillsetzung desselben. Andererseits kann die aus der Abwärme gewonnene mechanische Energie zur Stromerzeugung verwendet werden, um insbesondere die Traktionsbatterien (und freilich gegebenenfalls auch die "normale" Batterie des üblichen Bordnetzes eines Kraftfahrzeugs) von einen elektrischen Antrieb aufweisenden Hybridfahrzeugen zu laden.

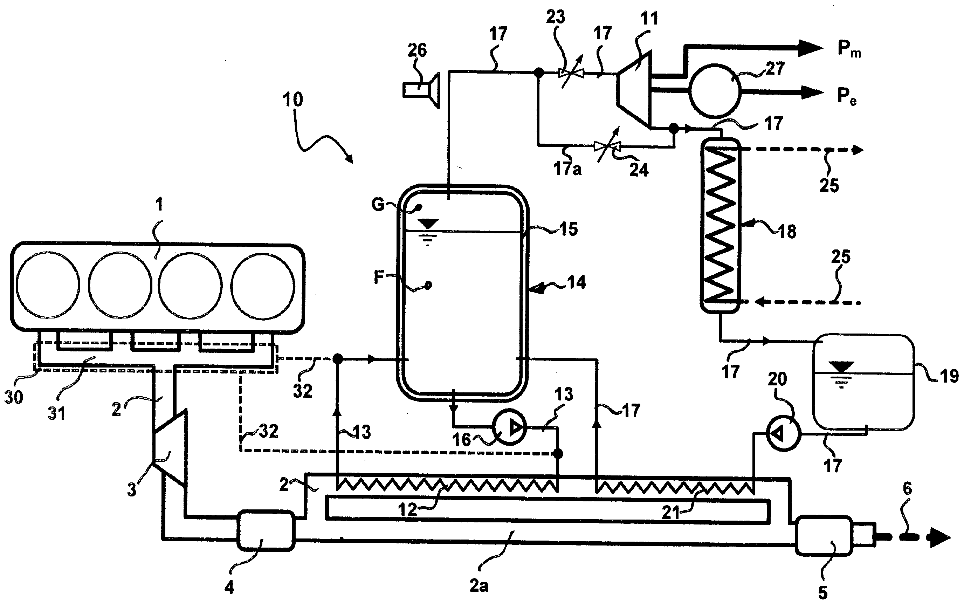

Weitere Merkmale und Vorteile der Erfindung ergeben sich aus der nachfolgenden Beschreibung eines Ausführungsbeispiels unter Bezugnahme auf die Zeichnung. Dabei zeigt die einzige Figur:
ein schematisches Fließschema einer Ausführungsform einer erfindungsgemäßen Vorrichtung zur Rückgewinnung von Wärme aus dem Verbrennungsmotor eines Kraftfahrzeugs sowie zur Umwandlung der rückgewonnenen Wärme in mechanische Energie mittels einer Expansionsmaschine einschließlich des Verbrennungsmotors sowie des hiervon abgeführten Abwärmestromes.

In der Zeichnung ist in schematischer Darstellung ein Verbrennungsmotor 1 eines im Übrigen nicht gezeigten Kraftfahrzeugs, z.B. eines Personen- oder Lastkraftwagens, wiedergegeben, welcher eine Abgasleitung 2 aufweist, in welchem dem Verbrennungsmotor 1 der als Abwärmestrom dienende Abgasstrom abgeführt wird. Die Abgasleitung 2 mündet beispielsweise in einen Turbolader 3 sowie in einen diesem nachgeordneten Katalysator 4 zur katalytischen Abgasreinigung, stromab desselben der Abgasstrom einen Endschalldämpfer 5 passiert und über einen Auspuff 6 in die Umgebung abgeführt wird.

Eine insgesamt mit dem Bezugszeichen 10 versehene Vorrichtung zur Rückgewinnung von Wärme aus dem Verbrennungsmotor 1 sowie zur Umwandlung der rückgewonnenen Wärme in mechanische Energie mittels einer z.B. nach Art einer Strömungs- oder Verdrängermaschine ausgebildeten Expansionsmaschine 11 enthält ein in einem Primärkreislauf geführtes und als Arbeitsmittelmedium dienendes Wärmespeicherfluid, z.B. Wasser, Alkohol, Lösungen derselben oder dergleichen, wobei der Primärkreislauf einen ersten Wärmetauscher 12 umfasst, welcher durch die Abwärme des in der Abgasleitung 2 geführten Abwärmestrom des Verbrennungsmotors 1 beheizt ist. Eine erste Ringleitung 13 des Primärkreislaufes verbindet das stromabwärtige Ende des ersten Wärmetauschers 12 mit einem Wärmespeicher 14, um das mittels des Abwärmestroms erhitzte Wärmespeicherfluid in den Wärmespeicher 14 zu überführen. Der Wärmespeicher 14 ist von einem Druckbehälter, beispielsweise mit einem Fassungsvermögen zwischen etwa 1 l und etwa 30 l, insbesondere zwischen etwa 2 l und etwa 20 l, gebildet, welcher mit einer geeigneten thermischen Isolierung versehen ist, die z.B. eine in einer doppelten Wandung 15 vorgesehene Vakuumisolierung und gegebenenfalls zusätzlich eine thermische Isolierung mit geeigneten Dämmmaterialien umfasst. Stromab des Wärmespeichers 14 verbindet die mit einer Steuer- und/oder regelbaren Primärpumpe 16 ausgestattete erste Ringleitung 13 des Primärkreislaufes den unteren Bereich des Wärmespeichers 14 mit dem stromaufwärtigen Ende des ersten Wärmetauschers 12, um den Primärkreislauf zu komplettieren.

Die Vorrichtung 10 weist darüber hinaus einen als Arbeitskreislauf dienenden Sekundärkreislauf des Wärmespeicherfluides auf, welche ausschließlich über den Wärmespeicher 14 mit dem Primärkreislauf in Verbindung steht und im Übrigen von diesem getrennt ist. Der Sekundärkreislauf umfasst eine zweite Ringleitung 17, welche von dem oberen Bereich des Wärmespeichers 14 in die Expansionsmaschine 11 mündet. Stromab der Expansionsmaschine 11 führt die zweite Ringleitung 17 in das stromaufwärtige Ende eines Kondensators 18, welcher zur Kondensation des Wärmespeicherfluides dient, sofern sich dieses stromab der Expansionsmaschine in einem (noch) gasförmigen Zustand befindet. Die zweite Ringleitung 17 verbindet ferner das stromabwärtige Ende des Kondensators 18 mit einem Pufferbehälter 19 zur bedarfsweisen Zwischenspeicherung des in dem Kondensator 18 kondensierten, flüssigen Wärmespeicherfluides. Die mit einer steuer- und/oder regelbaren Sekundärpumpe 20 ausgestattete zweite Ringleitung 17 verbindet überdies den unteren Bereich des Pufferbehälters 19 mit dem stromaufwärtigen Ende eines zweiten Wärmetauschers 21, welcher - ebenso wie der in dem Primärkreislauf angeordnete erste Wärmetauscher 12 - durch den in der Abgasleitung 2 des Verbrennungsmotors 1 geführten Abgas- bzw. Abwärmestrom beheizt und in Bezug auf die Abgasleitung 2 stromab des ersten Wärmetauschers 12 angeordnet ist, um die stromab des ersten Wärmetauschers 12 noch verfügbare Restwärme möglichst vollständig nutzbar machen zu können. Der erste Wärmetauscher 12 und der zweite Wärmetauscher 21 können z.B. in einem gemeinsamen Gehäuse oder in getrennten Gehäusen (jeweils nicht gezeigt) aufgenommen sein, welche(s) zweckmäßigerweise mit einer thermischen Isolierung versehen ist/sind. Von dem stromabwärtigen Ende des zweiten Wärmetauschers 21 mündet die zweite Ringleitung 17 schließlich wieder in den Wärmespeicher 14, um den Sekundärkreislauf zu komplettieren.

Wie überdies der Zeichnung zu entnehmen ist, ist der Innendruck des als Druckbehälter ausgestalteten Wärmespeichers 14 einerseits mittels eines stromab desselben und stromauf der Expansionsmaschine 11 in der zweiten Ringleitung 17 des Sekundärkreislaufes angeordneten Drucksteuer- und/oder -regelventils 23 steuer- bzw. regelbar, um - wie weiter unten noch näher erläutert - das in dem Wärmespeicher 14 bevorratete Wärmespeicherfluid zumindest teilweise und vorzugsweise vorwiegend im flüssigen Zustand zu halten. Der dem Drucksteuer- und/oder -regelventil 23 zugeordnete Steuer- und/oder Regelkreis (nicht gezeigt) kann zu diesem Zweck insbesondere mit einer Temperaturmesseinrichtung (ebenfalls nicht gezeigt) des Wärmespeichers 14 in Wirkverbindung stehen. Entsprechendes gilt zu demselben Zweck für die drucksteuer- und/oder -regelbare Sekundärpumpe 20. Wie ferner aus der Zeichnung ersichtlich, weist der Sekundärkreislauf im vorliegenden Fall darüber hinaus eine mit einem - z.B. entsprechend dem Ventil 23 ausgebildeten - Drucksteuer- und/oder -regelventil 24 ausgestattete Bypassleitung 17a auf, welche sich parallel zu der eigentlichen zweiten Ringleitung 17 erstreckt und die Expansionsmaschine 11 bedarfsweise bypasst, um den Wärmespeicher 11 über die zweite Ringleitung 17 unter Umgehung der Expansionsmaschine 11 bedarfsweise direkt mit dem Kondensator 18 zu verbinden, wenn das Drucksteuer- und/oder -regelventil 23 geschlossen worden ist und das Drucksteuer- und/oder -regelventil 24 die oben erwähnte Drucksteuerung oder -regelung des Wärmespeichers 14 übernommen hat. Es sei in diesem Zusammenhang darauf hingewiesen, dass stattdessen z.B. auch nur ein einziges solches Drucksteuer- und/oder -regelventil stromauf des Abzweigs der Bypassleitung 17a von der zweiten Ringleitung 17 vorgesehen sein kann, wobei dann einerseits die Bypassleitung 17a, andererseits der zwischen diesem Abzweig und der Expansionsmaschine 11 angeordnete Abschnitt der zweiten Ringleitung 17 jeweils mit einem einfachen Sperrventil ausgestattet sein können (nicht gezeigt). Eine solche Bypassleitung 17a zur bedarfsweisen Überbrückung der Expansionsmaschine 11 bietet sich insbesondere dann an, wenn der Kondensator 18, welcher grundsätzlich selbstverständlich auch mit Umgebungsluft gekühlt sein kann, mit einem Kühlmediumstrom 25 des Verbrennungsmotors 1 versorgt ist, so dass das Kühlmedium bedarfsweise erwärmt werden kann, um insbesondere die Warmlaufphasen des Verbrennungsmotors 1 zu verkürzen.

Um eine Überhitzung einzelner oder mehrerer Komponenten der Vorrichtung 10 infolge eines übermäßigen Wärmeeintrags durch das im Primär- und Sekundärkreislauf zirkulierte Wärmespeicherfluid während des Betriebs zu verhindern, kann die den Abwärmestrom führende Abgasleitung 2, insbesondere stromab des Katalysators 4 und stromauf des ersten 12 und zweiten Wärmetauschers 21, mit einem mit einer Ventilanordnung (nicht gezeigt) versehenen Abzweig 2a ausgestattet sein, welche die Wärmetauscher 12, 21 z.B. bedarfsweise bypasst und den Abgasstrom unter Umgehung der Wärmetauscher 12, 21 direkt an den Endschalldämpfer 5 überführt. Bei der Ventilanordnung kann es sich z.B. um je ein einerseits in dem Abzweig 2a, andererseits in der Abgasleitung 2 stromab des Abzweigs 2a und stromauf des ersten Wärmetauschers 12 angeordnetes Sperrventil, um ein in der Einmündung des Abzweigs 2a in die Abgasleitung 2 angeordnetes 3/2-Wegeventil oder dergleichen handeln.

Darüber hinaus kann für den Fall, dass bei einem temporär erhöhten Leistungsbedarf die Option einer temporären Erhöhung der Leistung der Expansionsmaschine 11 gegeben sein soll, in dem Sekundärkreislauf stromab des Wärmespeichers 14 und stromauf der Expansionsmaschine 11 ein insbesondere an die Kraftstoffversorgung des Verbrennungsmotors 2 angeschlossener Brenner vorgesehen sein, wie er schematisch mit dem Bezugszeichen 26 angedeutet ist und zur Überhitzung des dem Wärmespeicher 14 über die zweite Ringleitung 17 entnommenen gasförmigen Wärmespeichermediums dienen kann. Alternativ kann zu demselben Zweck an dem entsprechenden Abschnitt der zweiten Ringleitung 17 des Sekundärkreislaufes ein dritter Wärmetauscher (nicht gezeigt) vorgesehen sein, welcher seinerseits bedarfsweise an den Abwärmestrom des Verbrennungsmotors angeschlossen werden kann.

Wie es der Zeichnung nur in stark schematisierter Weise zu entnehmen ist, kann die Expansionsmaschine 11, insbesondere unter Zwischenschaltung eines Getriebes (nicht gezeigt), an den Antriebsstrang (ebenfalls nicht gezeigt) des Kraftfahrzeugs angeschlossen sein, so dass die von der Expansionsmaschine aus der Abwärme des Verbrennungsmotors 1 erzeugte mechanische Energie direkt zum Antrieb des Kraftfahrzeugs verwendet werden kann, sei es zur Unterstützung des Verbrennungsmotors 1 oder sei es alternativ unter Stillsetzung desselben. In diesem Fall wird folglich eine rein mechanische Leistung Pₘ zusätzlich zur Verfügung gestellt. Alternativ oder zusätzlich kann die Expansionsmaschine 11 an einen dieser nachgeordneten Stromgenerator 27 angeschlossen sein, welcher insbesondere mit der Stromversorgung (nicht gezeigt) des Kraftfahrzeugs in Verbindung stehen kann, so dass die aus der Abwärme des Verbrennungsmotors 1 gewonnene mechanische Energie zur Stromerzeugung verwendet werden kann, um z.B. die elektrischen Verbraucher eines Fahrzeugs, wie das Bordnetz und dessen Nebenkomponenten, oder insbesondere die Traktionsmaschine von Hybridfahrzeugen zu speisen oder auch deren Traktionsbatterien aufladen zu können. In letzterem Fall wird folglich eine elektrische Leistung Pₑ (zusätzlich) zur Verfügung gestellt.

Wie schließlich des Weiteren aus der Zeichnung hervorgeht, kann gemäß einer vorteilhaften Weiterbildung der Vorrichtung 10 vorgesehen sein, dass ein vierter Wärmetauscher 30 vorgesehen ist, welcher insbesondere (wenngleich nicht ausschließlich) im Falle einer vorteilhaften thermischen Isolierung der gesamten Abgasleitung 2 den Katalysator 4 sowie den diesem gegebenenfalls vorgeordneten Turbolader 3 vor einer Überhitzung zu schützen vermag. Der vierte Wärmetauscher 30 ist hierbei stromauf des ersten 12 und zweiten Wärmetauschers 21 und insbesondere direkt stromab des Verbrennungsmotors 1, z.B. im Bereich der Abgaskrümmer 31 desselben, angeordnet. Seine Leistung ist zweckmäßigerweise steuer- und/oder regelbar, was z.B. dadurch gewährleistet sein kann, dass er nach Art eines Verdampfungskühlers ausgestaltet ist, welchem die jeweils erforderliche Menge an einem Kühlmedium zugeführt werden kann, um zu verhindern, dass die Abgastemperatur in dem Turbolader 3 und/oder in dem Katalysator 4 einen vorgegebenen Maximalwert nicht überschreitet. Im vorliegenden Fall wird für das Kühlmedium gleichfalls das Wärmespeicherfluid verwendet, so dass die mittels des vierten Wärmetauschers 30 dem Abgas- bzw. Abwärmestrom entzogene Wärme gleichfalls wiederverwendet und dem Wärmespeicher 14 zugeführt werden kann. Dies kann insbesondere mittels eines in der Zeichnung strichpunktiert schematisierten Tertiärkreislaufes geschehen, welcher entsprechend dem Primärkreislauf die ausschließliche Funktion einer Überführung der dem Abgas- bzw. Abwärmestrom entnommenen Wärme an den Wärmespeicher 14 besitzt. Der Tertiärkreislauf umfasst folglich z.B. eine dritte Ringleitung 32, welche einerseits das stromabwärtige Ende des vierten Wärmetauschers 30 mit dem Wärmespeicher 14 verbindet bzw. - wie bei dem gezeigten Ausführungsbeispiel der Fall - in die erste Ringleitung 17 stromauf des Wärmespeichers 14 einmündet, und welche andererseits den unteren Bereich des Wärmespeichers 14 mit dem stromaufwärtigen Ende des vierten Wärmetauschers 30 verbindet bzw. - wie bei dem gezeigten Ausführungsbeispiel der Fall - aus der ersten Ringleitung 17 stromab des Wärmespeichers 14 ausmündet.

Nachfolgend ist eine bevorzugte Ausführungsform eines erfindungsgemäßen Verfahrens zur Rückgewinnung von Wärme aus dem Verbrennungsmotor eines Kraftfahrzeugs sowie zur Umwandlung der rückgewonnenen Wärme in mechanische Energie mittels einer Expansionsmaschine beschrieben, wie es mit der vorstehend beschriebenen Vorrichtung durchgeführt werden kann.

Gemäß diesem Verfahren wird das Wärmespeicherfluid einerseits mittels der Primärpumpe 16 durch die erste Ringleitung 13 in dem Primärkreislauf zirkuliert, wobei es in dem ersten Wärmetauscher 12 durch die Abwärme des in der Abgasleitung 2 geführten Abgas- bzw. Abwärmestrom des Verbrennungsmotors 1 erhitzt, in den Wärmespeicher 14 überführt und von dort zu dem ersten Wärmetauscher 12 rezirkuliert wird. Überdies kann das Wärmespeicherfluid, wie oben erwähnt, bedarfsweise durch die dritte Ringleitung 32 des Tertiärkreislaufes zirkuliert werden, um es mittels des vierten Wärmetauschers 30 zu erwärmen. Andererseits wird das Wärmespeicherfluid durch die zweite Ringleitung 17 in dem als Arbeitskreislauf dienenden Sekundärkreislauf zirkuliert, wobei es im dampfförmigen Zustand dem Wärmespeicher 14 entnommen und der Expansionsmaschine 11 zugeführt, stromab der Expansionsmaschine 11 mittels des Kondensators 18 kondensiert und in den Pufferbehälter 19 überführt wird, wo es erforderlichenfalls zwischengespeichert werden kann. Stromab des Pufferspeichers 19 wird das Wärmespeichermedium mittels der Sekundärpumpe 20 dem zweiten Wärmespeicher 21 zugeführt, welcher durch die Restwärme des in der Abgasleitung 2 geführten Abwärmestrom des Verbrennungsmotors 1 betrieben wird, um die zur Verfügung stehende Restwärme des Abgases möglichst vollständig auszunutzen. Von dem zweiten Wärmetauscher 21 wird das Wärmespeicherfluid schließlich in den Wärmespeicher 14 rezirkuliert.

Wie aus der Zeichnung ersichtlich, wird das Wärmespeicherfluid in dem Wärmespeicher 14 vorwiegend im flüssigen Zustand F gehalten, so dass der überwiegende Anteil der in dem Wärmespeicher 14 gespeicherten Wärmeenergie in dem im Wärmespeicher 14 im flüssigen Zustand F vorliegenden Wärmespeicherfluid gespeichert wird, was insbesondere dadurch geschieht, indem der Wärmespeicher 14 einerseits mittels des in der Leitung 17 des Sekundärkreislaufes (bzw. in dessen Bypassleitung 17a, sofern die Expansionsmaschine 11 gebypasst werden soll) angeordneten Drucksteuer- und/oder Druckregelventils 23 (bzw. 24), andererseits mittels der Sekundärpumpe 20 des Sekundärkreislaufes, auf einem Druck gehalten wird, bei welchem sich das Wärmespeicherfluid bei der jeweiligen, in dem Wärmespeicher 14 herrschenden und zweckmäßigerweise sensorisch erfassten Temperatur in einem unterkritischen thermodynamischen Gleichgewicht entsprechend der Siedelinie (in Bezug auf die flüssige Phase F) bzw. der Taulinie (in Bezug auf die mit der flüssigen Phase F im Gleichgewicht stehende Dampfphase G) in seinem Temperatur-Entropie-Diagramm befindet. Oberhalb der flüssigen Phase F des Wärmespeicherfluides befindet sich in dem Wärmespeicher 14 folglich eine Dampf- bzw. Gasphase G desselben, welche über die zweite Ringleitung 17 der Expansionsmaschine 11 aufgegeben werden kann. Die Gesamtmenge an dem in dem Primärkreislauf und in dem Sekundärkreislauf sowie gegebenenfalls in dem Tertiärkreislauf geführten Wärmespeicherfluid wird darüber hinaus insbesondere derart gewählt, dass zumindest im Falle eines maximal möglichen Füllgrades des Wärmespeicherfluides in dem Wärmespeicher 14 (der Wärmespeicher 14 ist gänzlich "aufgeladen") z.B. wenigstens etwa 80%, vorzugweise wenigstens etwa 90%, des in dem Wärmespeicher 14 zur Verfügung stehenden Innenvolumens mit im flüssigen Zustand F befindlichem Wärmespeicherfluid befüllt sind.

Ein Vorteil des erfindungsgemäß nach Art eines sogenannten Ruthsspeichers arbeitenden Wärmespeichers 14 besteht darin, dass aufgrund der hohen volumetrischen Energiedichte des hierin vornehmlich im flüssigen Zustand F bevorrateten Wärmespeicherfluides bei relativ geringen Geschwindigkeiten und mäßigen Beschleunigungen des Kraftfahrzeugs, wie beispielsweise im Stadtverkehr, die erforderliche Antriebsleistung gänzlich aus der mittels der Expansionsmaschine 11 erzeugten mechanischen Energie zur Verfügung gestellt werden kann, wobei diese mechanische Energie selbstverständlich auch kumulativ zur Unterstützung bzw. Entlastung des Verbrennungsmotors 1 genutzt werden kann. Dies geschieht durch die Entnahme des Wärmespeicherfluides aus dem Wärmespeicher 14 im dampfförmigen Zustand, wie insbesondere in Form von Sattdampf, und Einspeisung desselben in die Expansionsmaschine 11 über die zweite Ringleitung 17. Hierbei wird dem in dem Wärmespeicher 14 in flüssiger Phase F gespeicherten Wärmespeicherfluid (sowie auch dem Kesselmaterial) Verdampfungswärme entzogen, so dass die Temperatur und der Druck im Innern des Wärmespeichers 14 absinken. Die Entnahme des dampfförmigen Wärmespeicherfluides kann dabei insbesondere bedarfsorientiert, d.h. zeitlich und mengenmäßig in breiten Grenzen variabel erfolgen, so dass sie weitestgehend unabhängig von dem gerade zur Verfügung stehenden Abwärmeenergieangebot des in der Abgasleitung 2 geführten Abgasstroms des Verbrennungsmotors 1 ist. Während solcher Entnahmephasen, in welchen das Wärmespeicherfluid in dem Sekundärkreislauf über die zweite Ringleitung 17 zirkuliert wird, kann der Verbrennungsmotor 1 z.B. im Leerlauf betrieben oder auch gänzlich abgeschaltet werden (sogenannter Segelbetrieb des Kraftfahrzeugs). Hierdurch wird ermöglicht, dass der Verbrennungsmotor 1 nicht oder zumindest seltener in verbrauchsungünstigen Teillastbereichen betrieben werden muss.

Sofern die Expansionsmaschine 11 die erforderliche Antriebsleistung nicht mehr (vollständig) zur Verfügung zu stellen vermag (die Expansionsmaschinenleistung und/oder die in dem Wärmespeicher 14 gespeicherte Wärmeenergie ist erschöpft), kann eine weitere Dampfentnahme aus dem Wärmespeicher 14 über die zweite Ringleitung 17 des Sekundärkreislaufes unterbunden werden, indem das Drucksteuerund/oder -regelventil 23 (sowie freilich auch das Drucksteuer- und/oder -regelventil 24 der Bypassleitung 17a) geschlossen wird und der Verbrennungsmotor 1, sofern er sich (noch) im Stillstand befindet, zugeschaltet wird, um mittels seines Abwärmestromes dem Wärmespeicher 14 über die erste Ringleitung 13 des Primärkreislaufes - und gegebenenfalls über die zweite Ringleitung 17 des Sekundärkreislaufes, sofern der Pufferspeicher 19 Wärmespeicherfluid enthält und die Abgaswärme ausreicht - Wärmeenergie zuzuführen.

Zu diesem Zweck wird das Wärmespeichermedium mittels der Primärpumpe 16 über die erste Ringleitung 13 stets im Kreislauf zwischen dem ersten Wärmetauscher 12 und dem Wärmespeicher 14 zirkuliert. Hierbei kann der erste Wärmetauscher 12 je nach der im Primärkreislauf umgewälzten Menge an Wärmespeicherfluid und in dem Abwärmestrom zur Verfügung stehender Wärme nach Art eines "Durchlauferhitzers", aber auch nach Art eines partiellen oder gänzlichen Verdampfers des Wärmespeicherfluides wirken. Die hierbei in dem Wärmespeicherfluid aufgenommene Wärmeenergie erhöht bei seinem Eintritt in den Wärmespeicher 14 infolge Mischen bzw. Kondensieren eines etwaigen Dampfanteils die innere Energie des in dem Wärmespeicher 14 vorwiegend in flüssiger Phase F gespeicherten Wärmespeicherfluides. Hierdurch erhöhen sich der Druck und die Temperatur in dem Wärmespeicher 14. Darüber hinaus kann dem Abgas- bzw. Abwärmestrom des Verbrennungsmotors 1 die verbleibende Restwärme entzogen werden, indem das in dem Pufferspeicher 19 des Sekundärkreislaufes befindliche Wärmespeicherfluid mittels der Sekundärpumpe 20 über die zweite Ringleitung 17 des Sekundärkreislaufes an den zweiten Wärmetauscher 21 überführt und nach Passieren desselben gleichfalls dem Wärmespeicher 14 zugesetzt wird, so dass sich der Abgasstrom praktisch auf Kondensattemperatur abzukühlen vermag. Folglich kann dem Abgas- bzw. Abwärmestrom die größtmögliche Menge an Wärmeenergie zum Zwecke der Wiederverwertung entzogen werden. Auch durch eine solche Zuführung von Wärmespeicherfluid aus dem zweiten Wärmetauscher 21 des Sekundärkreislaufes in den Wärmespeicher 14 erhöht sich sowohl die dort auf Vorrat gehaltene Menge an Wärmespeicherfluid als auch die gespeicherte Wärmemenge. Die "Aufladung" des Wärmespeichers 14 kann beispielsweise so lange geschehen, bis eine vorherbestimmte Maximaltemperatur und/oder ein maximaler Füllstand an in flüssiger Phase F befindlichem Wärmespeicherfluid erreicht worden ist. Sodann wird z.B. durch Öffnen des Ventils 23 (bzw. 24) die Dampfentnahme aus dem Wärmespeicher über die zweite Ringleitung 17 des Arbeits- bzw. Sekundärkreislaufes freigeben, um die Expansionsmaschine 11 anzutreiben (bzw. um den Kühlmediumkreislauf 25 des Kraftfahrzeugs durch direktes Überführen des dampfförmigen Wärmespeicherfluides an den Kondensators 18 unter Bypassen der Expansionsmaschine 11 über die Bypassleitung 17a) freizugeben. Das "Laden" des Wärmespeichers 14 sowie dessen "Entladen" können beispielweise im Wesentlichen nach Art einer Hysterese erfolgen.

Sofern sich der Verbrennungsmotor 1 in Betrieb befindet und die gewünschte Antriebsleistung des Kraftfahrzeugs hoher ist als die maximale Leistung der Expansionsmaschine 11 kann letztere zur Unterstützung des Verbrennungsmotors 1 herangezogen werden, indem die von ihr erzeugte mechanische Leistung Pₘ an den Antriebsstrang des Kraftfahrzeugs abgegeben wird. In einem solchen Zustand wird dem Wärmespeicher 14 über die zweite Ringleitung 17 des Sekundärkreislaufes (das Ventil 24 der Bypassleitung 17a ist geschlossen) insbesondere nur so viel dampfförmiges Wärmespeicherfluid entnommen und der Expansionsmaschine 11 zugeführt, wie durch den ersten Wärmetauscher 12 des Primärkreislaufes, gegebenenfalls in Verbindung mit dem zweiten Wärmetauscher 21 des Sekundärkreislaufes aus dem Abwärmestrom regeneriert und in den Wärmespeicher 14 eingespeist werden kann. Hierdurch bleiben der Druck und die Temperatur des in dem Wärmespeicher 14 auf Vorrat gehaltenen Wärmespeicherfluides im Wesentlichen konstant. Folglich kann der Verbrennungsmotor 1 bei einer solchen Betriebsweise, z.B. während der Fahrt auf einer Autobahn, von der Expansionsmaschine 11 unterstützt und folglich entlastet werden, um den Kraftstoffverbrauch zu senken. Andererseits kann die von der Expansionsmaschine 11 erzeugte mechanische Leistung Pₘ im Rahmen der zur Verfügung stehenden Leistung des Kondensators 18 überproportional an den Antriebsstrang des Kraftfahrzeugs abgegeben werden, so dass die Expansionsmaschine 11 nach Art eines "Boosters" wirkt, um während eines zeitlich begrenzten Zeitraumes, z.B. anlässlich eines Überholvorganges, eine maximale Antriebsleistung zur Verfügung zu stellen.

Wie oben angedeutet, vermag aufgrund der erfindungsgemäßen Ausgestaltung für eine breite zeitliche Entkopplung einer Wärmezufuhr an den Wärmespeicher 14 von einer Wärmeanfuhr aus dem Wärmespeicher 14 zum Antrieb der Expansionsmaschine 11 gesorgt werden. Hierbei sind beispielsweise die folgenden Betriebsweisen denkbar:
1. Sofern die Expansionsmaschine 11 ihre erzeugte mechanische Leistung Pₘ an den Antriebsstrang des Kraftfahrzeugs abgibt, vermag diese für den alleinigen Antrieb des Kraftfahrzeugs zu sorgen, während der Verbrennungsmotor 1 von dem Antriebsstrang entkoppelt wird und sich entweder im Leerlaufbetrieb befinden kann, um beispielweise die benötigten Nebenaggregate des Kraftfahrzeugs anzutreiben, oder der Verbrennungsmotor 1 kann gänzlich stillgesetzt werden, wobei ein potenzieller Leistungsbedarf etwaiger Nebenaggregate des Kraftfahrzeugs durch eine Elektrifizierung dieser Komponenten in elektrischer Weise gedeckt wird.
2. Überschreitet der zum Antrieb des Kraftfahrzeugs erforderliche Leistungsbedarf die Leistungsfähigkeit der Expansionsmaschine 11 und erfordert oder ermöglicht der Ladezustand des Wärmespeichers 14 eine Entladung desselben, so wird der Expansionsmaschine 11 über die zweite Ringleitung 17 des Sekundärkreislaufes (das Ventil 24 der Bypassleitung 17a ist geschlossen) über das Ventil 23 ein entsprechender Strom an dampfförmigem Wärmespeicherfluid zugeführt, um mit der erzeugten mechanischen Leistung Pₘ den Verbrennungsmotor 1 zu unterstützen. Hierbei wird der Ladezustand des Wärmespeichers 14 reduziert; Druck und Temperatur des hierin auf Vorrat gehaltenen Wärmespeicherfluides sinken ab. Durch eine solche Lastabsenkung des Verbrennungsmotors 1 wird auch dann eine Senkung des Kraftstoffverbrauches erreicht, wenn sich der effektive Wirkungsgrad des Verbrennungsmotors 1 selbst infolge der Lastabsenkung verschlechtern sollte.
3. Besteht während des Betriebs des Verbrennungsmotors 1, insbesondere annähernd unter Volllast, ein zusätzlicher temporärer Leistungsbedarf nach Art einer "Boostleistung", so kann der Verbrennungsmotor 1 vorübergehend durch von der Expansionsmaschine 11 erzeugte mechanische Leistung Pₘ unterstützt werden, so dass die zur Verfügung stehende Gesamtleistung die - alleinige - Maximalleistung des Verbrennungsmotors 1 übertrifft. In jedem Fall sollte jedoch dafür Sorge getragen werden, dass die mittels des Kondensators 18 dem Wärmespeicherfluid in dem Sekundärkreislauf entzogene Wärme in hinreichendem Maße abgeführt werden kann und die maximal mögliche Kondensatorkühlleistung nicht überschritten wird.

Wie oben bereits erwähnt, vermag aufgrund der erfindungsgemäßen Ausgestaltung ferner für eine sowohl aus ökonomischen als auch aus ökologischen Gründen erstrebenswerte Verkürzung der Warmlaufphasen des Verbrennungsmotors 1 gesorgt werden, indem mittels des in dem Sekundärkreislauf angeordneten Kondensators 18 der Kühlmediumstrom 25 des Verbrennungsmotors 1 vorgewärmt wird, sei es unter Bypassen der Expansionsmaschine 11 über die Bypassleitung 17a (das Ventil 23 ist geschlossen; das Ventil 24 ist geöffnet) oder sei es unter Nutzung der stromab der Expansionsmaschine 11 in dem Wärmespeicherfluid noch vorhandenen (Rest)wärme in dem Kondensator 18 (das Ventil 24 ist geschlossen; das Ventil 23 ist geöffnet). In diesem Zusammenhang sei darauf hingewiesen, dass z.B. bei einem Fahrzeugstart mit betriebswarmem Motor (die Kühlmediumtemperatur beträgt etwa 90°C) gegenüber einer Starttemperatur von 20°C eine Reduktion des Kraftstoffverbrauchs um etwa 5% erreicht wird (FVV Vorhaben Nr. 1007 "Restwärmenutzung durch intelligente Speicher- und Verteilungssysteme (Literaturstudie)", Abschlussbericht). Bei tieferen Starttemperaturen erhöht sich das Kraftstoffeinsparpotenzial signifikant. Zwecks einer solchen Vorwärmung des Kühlmediumkreislaufes 25 des Verbrennungsmotors 1 wird der Kühlmediumkreislauf 25 des Kraftfahrzeugs mittels seiner Kühlmediumpumpe zirkuliert, so dass es den Kondensator 18 durchströmt. Das Wärmespeicherfluid wird dem Wärmespeicher 14 im dampfförmigen Zustand G über die zweite Ringleitung 17 des Sekundärkreislaufes entnommen und dem Kondensator 18 zugeführt, wobei es vorzugsweise mittels der Bypassleitung 17a an der Expansionsmaschine 11 vorbeigeführt und mittels des Drucksteuer- und/oder -regelventils 24 auf Kondensationsdruck gedrosselt wird. In dem Kondensator 18 wird die Kondensationsenthalpie des Wärmespeicherfluides an den umgewälzten Kühlmediumstrom 25 abgegeben, wodurch diese erwärmt und folglich die Warmlaufphase des Verbrennungsmotors 1 verkürzt wird. Diese Betriebsweise wird so lange aufrechterhalten, bis der Verbrennungsmotor 1 seine Betriebstemperatur erreicht und/oder der Wärmespeicher 14 energetisch erschöpft ist. Überdies ist es denkbar, den Ölkreislauf des Kraftfahrzeugs in eine solche Vorwärmung zu integrieren, indem er gleichfalls in einer separaten Zirkulationsleitung (nicht zeichnerisch dargestellt) dem Kondensator 18 zugeführt wird. Ferner kann in analoger Weise beispielweise auch der Fahrgastraum des Kraftfahrzeugs vorgewärmt werden.

Sofern das Kraftfahrzeug einen Hybridantrieb mit einem dem Verbrennungsmotor 1 nebengeordneten Elektromotor (nicht zeichnerisch wiedergegeben) aufweist, z.B. in Form eines parallelen oder seriellen Hybrids oder eines Mischhybrids, so kann die von der Expansionsmaschine 11 erzeugte mechanische Leistung teilweise oder gänzlich an den Stromgenerator 27 abgegeben werden, welcher sie in elektrische Leistung Pₑ umwandelt, um sie insbesondere für den Elektromotor des Hybridantriebs nutzbar zu machen. Der Elektromotor kann dabei direkt mit der von dem Stromgenerator 27 erzeugten elektrischen Leistung Pₑ gespeist werden, oder letztere wird in einem Traktionsbatteriepaket des Elektromotors gespeichert. Auch insoweit sind sämtliche der oben genannten Betriebsweisen denkbar, wobei sich beispielsweise die folgenden, vorteilhaften Aspekte ergeben:
- das Kraftfahrzeug kann über längere Zeiträume rein elektrisch angetrieben werden;
- aufgrund der zusätzlich aus dem Abwärmestrom des Verbrennungsmotors 1 mittels des Stromgenerators 27 erzeugten elektrischen Energie kann der Gesamtwirkungsgrad verbessert und kann das Traktionsbatteriepaket kleiner und demnach kostengünstiger sowie leichter ausgestaltet werden;
- das Traktionsbatteriepaket kann auch während Betriebsphasen, in welchen nicht (hinreichend) Abwärme des Verbrennungsmotors 1 zur Verfügung steht, durch Entnahme von dampfförmigem Wärmespeicherfluid aus dem Wärmespeicher 14 über die zweite Ringleitung 17 des Sekundärkreislaufes und Antreiben der Expansionsmaschine 11 sowie des dieser nachgeordneten Stromgenerators 27 aufgeladen werden, sofern eine zusätzliche Erhöhung der elektrischen Reichweite gerade erwünscht ist (der Wärmespeicher 14 dient folglich als eine Art "Pufferspeicher" des Traktionsbatteriepaketes;
- das Traktionsbatteriepaket kann in entsprechender Weise vorgewärmt werden wie der Kühlmediumkreislauf 25 des Verbrennungsmotors 1, sofern es mit einem Temperiermediumkreislauf ausgestattet wird, welcher seinerseits mit dem Kondensator 18 verbunden wird.

## Patentansprüche

1. Verfahren zur Rückgewinnung von Wärme aus einem Verbrennungsmotor (1), insbesondere eines Kraftfahrzeugs, sowie zur Umwandlung der rückgewonnenen Wärme in mechanische Energie mittels einer Expansionsmaschine (11), wobei ein mittels wenigstens einer Primärpumpe (16) in einem Primärkreislauf geführtes Wärmespeicherfluid mittels wenigstens eines ersten Wärmetauschers (12) durch die Abwärme des Verbrennungsmotors (1) erhitzt, in einen Wärmespeicher (14) überführt und zu dem wenigstens einen ersten Wärmetauscher (12) rezirkuliert wird, und wobei das Wärmespeicherfluid ferner in einem Sekundärkreislauf geführt wird, indem es im dampfförmigen Zustand (G) dem Wärmespeicher (14) entnommen und der Expansionsmaschine (11) zugeführt, stromab der Expansionsmaschine (11) mittels eines Kondensators (18) kondensiert und mittels wenigstens einer Sekundärpumpe (20) in den Wärmespeicher (14) rezirkuliert wird, **dadurch gekennzeichnet, dass** der Primärkreislauf des Wärmespeicherfluides ausschließlich über den Wärmespeicher (14) mit dem Sekundärkreislauf verbunden und im Übrigen von diesem getrennt wird.

2. Verfahren nach Anspruch 1, **dadurch gekennzeichnet, dass** das Wärmespeicherfluid in dem Wärmespeicher (14) zumindest überwiegend im flüssigen Zustand (F) gehalten wird, so dass der überwiegende Anteil der im Wärmespeicher (14) gespeicherten Wärme in dem im Wärmespeicher (14) im flüssigen Zustand (F) vorliegenden Wärmespeicherfluid gespeichert wird, wobei das Wärmespeicherfluid in dem Wärmespeicher (14) insbesondere dadurch zumindest überwiegend im flüssigen Zustand gehalten wird, indem der Wärmespeicher (14)
- mittels wenigstens eines stromab desselben in dem Sekundärkreislauf angeordneten Drucksteuer- und/oder -regelventils (23, 24); und/oder
- mittels der in dem Sekundärkreislauf angeordneten, drucksteuer- und/oder -regelbaren Sekundärpumpe; und/oder
- mittels einer Drucksteuerung und/oder -regelung der Expansionsmaschine (11), welche die Druckabnahme des sie durchsetzenden Wärmespeicherfluides steuert und/oder regelt,
auf einem Druck gehalten wird, bei welchem der überwiegende Anteil des im Wärmespeicher (14) befindlichen Wärmespeicherfluides im flüssigen Zustand (F) vorliegt.

3. Verfahren nach Anspruch 1 oder 2, **dadurch gekennzeichnet, dass** das Wärmespeicherfluid in dem Wärmespeicher (14) im Wesentlichen in einem unterkritischen thermodynamischen Gleichgewicht zwischen seinem flüssigen Zustand (F) und seinem Dampfzustand (G) gemäß einer der Isobaren zwischen der Siedelinie (untere Grenzlinie) und der Taulinie (obere Grenzlinie) in seinem Temperatur-Entropie-Diagramm (T,s-Diagramm) bei der jeweiligen, in dem Wärmespeicher (14) herrschenden Temperatur gehalten wird.

4. Verfahren nach einem der Ansprüche 1 bis 3, **dadurch gekennzeichnet, dass** die Expansionsmaschine (11) ausschließlich mit dem im dampfförmigen Zustand (G) befindlichen Wärmespeicherfluid aus dem Wärmespeicher (14) gespeist wird.

5. Verfahren nach einem der Ansprüche 1 bis 4, **dadurch gekennzeichnet, dass** das Wärmespeicherfluid in dem Sekundärkreislauf stromab des Kondensators (18) mittels wenigstens eines Wärmetauschers (21) durch die Abwärme des Verbrennungsmotors (1) erhitzt wird, bevor es in den Wärmespeicher (14) rezirkuliert wird, wobei das Wärmespeicherfluid in dem Sekundärkreislauf insbesondere mittels wenigstens des zweiten Wärmtauschers (21) erhitzt wird, welcher durch die Restwärme des Verbrennungsmotors (1) betrieben wird, nachdem dessen Abwärme mittels des wenigstens einen ersten Wärmetauschers (12) dem im Primärkreislauf geführten Wärmespeicherfluid zugeführt worden ist.

6. Verfahren nach einem der Ansprüche 1 bis 5, **dadurch gekennzeichnet, dass** der Kondensator (18)
- mit Umgebungsluft;
- mit einem Kühlmedium (25) des Verbrennungsmotors (1); oder
- mit einem anderen Kühlmediumkreislauf eines Kraftfahrzeugs
versorgt wird, um das Wärmespeicherfluid in dem Sekundärkreislauf zu kondensieren.

7. Verfahren nach Anspruch 6, **dadurch gekennzeichnet, dass** der Kondensator (18) mit einem Kühlmedium (25), insbesondere des Verbrennungsmotors (1), versorgt wird, wobei das Kühlmedium (25) bedarfsweise, insbesondere während Aufwärmphasen des Verbrennungsmotors (1), durch das Wärmespeicherfluid erwärmt wird, wobei zur bedarfsweisen Erwärmung des Kühlmediums (25) insbesondere das Wärmespeichermedium in dem Sekundärkreislauf über eine Bypassleitung (17a) an der Expansionsmaschine (11) vorbei direkt dem Kondensator (18) zugeführt wird.

8. Verfahren nach einem der Ansprüche 1 bis 7, **dadurch gekennzeichnet, dass** das kondensierte Wärmespeicherfluid in dem Sekundärkreislauf stromab des Kondensators (18) in einem Pufferbehälter (19) zwischengespeichert wird, von welchem es mittels der Sekundärpumpe (20) in den Wärmespeicher (14) rezirkuliert wird.

9. Verfahren nach Anspruch 5 oder nach einem der Ansprüche 6 oder 7, wenn nach Anspruch 5, **dadurch gekennzeichnet, dass** der wenigstens eine erste Wärmetauscher (12) und/oder der wenigstens eine zweite Wärmetauscher (21) von der Ab- bzw. Restwärme des Verbrennungsmotors (1) entkoppelt wird/werden, wenn
- der Wärmespeicher (14) bei einer maximalen Temperatur seinen maximalen Druck erreicht hat; und/oder
- der Wärmespeicher (14) seine maximale Füllmenge mit dem Wärmespeicherfluid erreicht hat; und/oder
- das in dem Sekundärkreislauf zirkulierte Wärmespeicherfluid in dem Kondensator (18) infolge der dort abgeführten Wärme nicht mehr kondensiert werden kann.

10. Verfahren nach einem der Ansprüche 1 bis 9, **dadurch gekennzeichnet, dass** das aus dem Wärmespeicher (14) im dampfförmigen Zustand (G) in den Sekundärkreislauf eingespeiste Wärmespeicherfluid bedarfsweise stromauf der Expansionsmaschine (11) überhitzt wird, wobei das Wärmespeicherfluid insbesondere
- mittels wenigstens eines dritten Wärmetauschers, welcher bedarfsweise mit einem Abwärmestrom des Verbrennungsmotors (1) gespeist wird, oder
- mittels eines Brenners (26), welcher insbesondere an die Kraftstoffversorgung des Verbrennungsmotors (1) angeschlossen ist,
bedarfsweise überhitzt wird.

11. Verfahren nach Anspruch 10, **dadurch gekennzeichnet, dass** der erste Wärmetauscher (12) und/oder der zweite Wärmetauscher (21) und gegebenenfalls der dritte Wärmetauscher von einem Abgasstrom des Verbrennungsmotors (1) gespeist wird/werden.

12. Verfahren nach einem der Ansprüche 1 bis 11, **dadurch gekennzeichnet, dass** die Menge an in dem Primärkreislauf und in dem Sekundärkreislauf zirkuliertem Wärmespeicherfluid derart gewählt wird, dass bei einem maximal möglichen Füllstand des Wärmespeicherfluides in dem Wärmespeicher (14) wenigstens 50%, insbesondere wenigstens 70%, vorzugsweise wenigstens 90%, des in dem Wärmespeicher (14) zur Verfügung stehenden Volumens mit im flüssigen Zustand (F) befindlichem Wärmespeicherfluid befüllt sind.

13. Verfahren nach einem der Ansprüche 1 bis 12, **dadurch gekennzeichnet, dass**
- zumindest ein Teil der mittels der Expansionsmaschine (11) gewonnenen mechanischen Energie, insbesondere unter Zwischenschaltung eines Getriebes, an den Antriebsstrang des Kraftfahrzeugs abgegeben wird; und/oder
- zumindest ein Teil der mittels der Expansionsmaschine (11) gewonnenen mechanischen Energie an einen der Expansionsmaschine (11) nachgeordneten Stromgenerator (27) abgegeben wird, dessen hieraus erzeugter Strom in die Stromversorgung des Kraftfahrzeugs eingespeist wird.

14. Vorrichtung zur Rückgewinnung von Wärme aus einem Verbrennungsmotor (1), insbesondere eines Kraftfahrzeugs, sowie zur Umwandlung der rückgewonnenen Wärme in mechanische Energie mittels einer Expansionsmaschine (11), insbesondere zur Durchführung eines Verfahrens nach einem der Ansprüche 1 bis 13, mit einem Primärkreislauf eines Wärmespeicherfluides, welcher wenigstens einen ersten Wärmetauscher (12), welcher durch die Abwärme eines Abwärmestroms des Verbrennungsmotors (1) beheizt ist, einen Wärmespeicher (14) und eine den ersten Wärmetauscher (12) mit dem Wärmespeicher (14) verbindende erste Ringleitung (13) mit wenigstens einer Primärpumpe (16) umfasst, und mit einem Sekundärkreislauf des Wärmespeicherfluides, welcher mit dem Primärkreislauf in Verbindung steht und die Expansionsmaschine (11), einen stromab derselben angeordneten Kondensator (18) und eine zweite Ringleitung (17) mit wenigstens einer Sekundärpumpe (20) umfasst, **dadurch gekennzeichnet, dass** der Primärkreislauf des Wärmespeicherfluides ausschließlich über den Wärmespeicher (14) mit dem Sekundärkreislauf in Verbindung steht und im Übrigen von diesem getrennt ist.

15. Vorrichtung nach Anspruch 14, **dadurch gekennzeichnet, dass** der Wärmespeicher (14) als Druckbehälter ausgebildet ist, dessen Innendruck
- mittels wenigstens eines stromab desselben in dem Sekundärkreislauf angeordneten Drucksteuer- und/oder -regelventils (23, 24); und/oder
- mittels der in dem Sekundärkreislauf angeordneten, drucksteuer- und/oder -regelbaren Sekundärpumpe; und/oder
- mittels einer Drucksteuerung und/oder -regelung der Expansionsmaschine (11), welche die Druckabnahme des sie durchsetzenden Wärmespeicherfluides steuert und/oder regelt,
steuerbar und/oder regelbar ist.

16. Vorrichtung nach Anspruch 14 oder 15, **dadurch gekennzeichnet, dass** die im Sekundärkreislauf angeordnete Expansionsmaschine (11) ausschließlich mittels der zweiten Ringleitung (17) mit dem Wärmespeicher (14) verbunden ist.

17. Vorrichtung nach einem der Ansprüche 14 bis 16, **dadurch gekennzeichnet, dass** der Sekundärkreislauf wenigstens einen zweiten Wärmetauscher (21) umfasst, welcher durch die Abwärme des Verbrennungsmotors (1) beheizt und stromab des Kondensators (18) angeordnet ist, wobei der wenigstens eine zweite Wärmetauscher (21) insbesondere in einem Restwärmestrom des Verbrennungsmotors (1) stromab des wenigstens einen ersten Wärmetauschers (12) angeordnet ist.

18. Vorrichtung nach einem der Ansprüche 14 bis 17, **dadurch gekennzeichnet, dass** der Kondensator (18)
- mit Umgebungsluft;
- mit einem Kühlmedium des Verbrennungsmotors (1); oder
- mit einem anderen Kühlmediumkreislauf eines Kraftfahrzeugs
versorgt ist.

19. Vorrichtung nach einem der Ansprüche 14 bis 18, **dadurch gekennzeichnet, dass** der Sekundärkreislauf eine mit einem Sperrventil, insbesondere in Form eines Drucksteuer- und/oder -regelventils (24), ausgestattete Bypassleitung (17a) aufweist, welche die Expansionsmaschine (11) bypasst und den Wärmespeicher (14) über die zweite Ringleitung (17) bedarfsweise unmittelbar mit dem Kondensator (18) verbindet.

20. Vorrichtung nach einem der Ansprüche 14 bis 19, **dadurch gekennzeichnet, dass** der Sekundärkreislauf einen stromab des Kondensators (18) angeordneten Pufferbehälter (19) für das Wärmespeicherfluid aufweist.

21. Vorrichtung nach einem der Ansprüche 14 bis 20, **dadurch gekennzeichnet, dass** der Ab- bzw. Restwärmestrom des Verbrennungsmotors (1) mittels eines mit einem Ventil versehenen Abzweigs (2a)
- von dem wenigstens einen ersten Wärmetauscher (12) und/oder
- von dem wenigstens einen zweiten Wärmetauscher (21) trennbar ist, um den ersten Wärmetauscher (12) und/oder den zweiten Wärmetauscher (21) bedarfsweise zu bypassen.

22. Vorrichtung nach einem der Ansprüche 14 bis 21, **dadurch gekennzeichnet, dass** der Sekundärkreislauf stromab des Wärmespeichers (14) und stromauf der Expansionsmaschine (11)
- einen dritten Wärmetauscher, welcher bedarfsweise an einen Abwärmestrom des Verbrennungsmotor (1) anschließbar ist, oder
- einen Brenner (26), welcher insbesondere an die Kraftstoffversorgung des Verbrennungsmotors (1) angeschlossen ist,
aufweist.

23. Vorrichtung nach Anspruch 22, **dadurch gekennzeichnet, dass** der erste Wärmetauscher (12) und/oder der zweite Wärmetauscher (21) und gegebenenfalls der dritte Wärmetauscher von einem Abgasstrom des Verbrennungsmotors (1) gespeist sind.

24. Vorrichtung nach einem der Ansprüche 14 bis 23, **dadurch gekennzeichnet, dass** der Wärmespeicher (14)
- mit einer thermischen Isolierung und/oder
- mit einer mehrlagigen Wandung (15), in deren Zwischenraum Unterdruck oder Vakuum herrscht oder ein Aerogel oder ein thermochemisches Speichermedium aufgenommen ist,
versehen ist.

25. Vorrichtung nach einem der Ansprüche 14 bis 24, **dadurch gekennzeichnet, dass**
- die Expansionsmaschine (11), insbesondere unter Zwischenschaltung eines Getriebes, an den Antriebsstrang des Kraftfahrzeugs angeschlossen ist, und/oder
- die Expansionsmaschine (11) an einen dieser nachgeordneten Stromgenerator (27) angeschlossen ist, welcher mit der Stromversorgung des Kraftfahrzeugs in Verbindung steht.

## Claims

1. Method for recovering heat from a combustion engine (1), in particular of a motor vehicle, and for converting the recovered heat into mechanical energy by means of an expansion machine (11), wherein a heat accumulator fluid which is guided in a primary circuit by means of at least one primary pump (16) is heated by the waste heat of the combustion engine (1) by means of at least one first heat exchanger (12), is transferred into a heat accumulator (14) and recirculated to the at least one first heat exchanger (12), and wherein the heat accumulator fluid is furthermore guided in a secondary circuit by said heat accumulator fluid being extracted in the vapour state (G) from the heat accumulator (14) and being supplied to the expansion machine (11), and being condensed by means of a condenser (18) downstream of the expansion machine (11) and being recirculated into the heat accumulator (14) by means of at least one secondary pump (20), **characterized in that** the primary circuit of the heat accumulator fluid is connected to the secondary circuit exclusively via the heat accumulator (14) and is otherwise separated from said secondary circuit.

2. Method according to Claim 1, **characterized in that** the heat accumulator fluid in the heat accumulator (14) is kept at least predominantly in the liquid state (F), and therefore the predominant portion of the heat stored in the heat accumulator (14) is stored in the heat accumulator fluid present in the liquid state (F) in the heat accumulator (14), wherein, in particular, the heat accumulator fluid in the heat accumulator (14) is kept at least predominantly in the liquid state by the heat accumulator (14) being kept
- by means of at least one pressure control and/or regulating valve (23, 24) arranged in the secondary circuit downstream of said heat accumulator; and/or
- by means of the pressure-controllable and/or regulable secondary pump arranged in the secondary circuit; and/or
- by means of a pressure control and/or regulation of the expansion machine (11) which controls and/or regulates the pressure decrease in the heat accumulator fluid passing therethrough,
to a pressure at which the predominant portion of the heat accumulator fluid located in the heat accumulator (14) is present in the liquid state (F).

3. Method according to Claim 1 or 2, **characterized in that** the heat accumulator fluid in the heat accumulator (14), at the respective temperature prevailing in the heat accumulator (14), is kept substantially in subcritical thermodynamic equilibrium between its liquid state (F) and its vapour state (G) in accordance with one of the isobars between the saturated liquid curve (lower boundary curve) and the saturated vapour curve (upper boundary curve) in its temperature-entropy diagram (T,s diagram).

4. Method according to one of Claims 1 to 3, **characterized in that** the expansion machine (11) is fed exclusively with the heat accumulator fluid in the vapour state (G) from the heat accumulator (14).

5. Method according to one of Claims 1 to 4, **characterized in that** the heat accumulator fluid in the secondary circuit downstream of the condenser (18) is heated by the waste heat of the combustion engine (1) by means of at least one heat exchanger (21) before said heat accumulator fluid is recirculated into the heat accumulator (14), wherein, in particular, the heat accumulator fluid in the secondary circuit is heated by means of the at least one second heat exchanger (21) which is operated by the residual heat of the combustion engine (1) after the waste heat thereof has been supplied by means of the at least one first heat exchanger (12) to the heat accumulator fluid guided in the primary circuit.

6. Method according to one of Claims 1 to 5, **characterized in that** the condenser (18) is supplied
- with ambient air;
- with a cooling medium (25) of the combustion engine (1); or
- with another cooling medium circuit of a motor vehicle,
in order to condense the heat accumulator fluid in the secondary circuit.

7. Method according to Claim 6, **characterized in that** the condenser (18) is supplied with a cooling medium (25), in particular from the combustion engine (1), wherein the cooling medium (25) is heated as required, in particular during heating-up phases of the combustion engine (1), by the heat accumulator fluid, wherein, in particular, for the heating of the cooling medium (25) as required, the heat accumulator medium in the secondary circuit is supplied directly to the condenser (18) past the expansion machine (11) via a bypass line (17a).

8. Method according to one of Claims 1 to 7, **characterized in that** the condensed heat accumulator fluid in the secondary circuit downstream of the condenser (18) is temporarily stored in a buffer container (19) from which said heat accumulator fluid is recirculated into the heat accumulator (14) by means of the secondary pump (20).

9. Method according to Claim 5 or according to one of Claims 6 or 7, as far as being dependent on Claim 5, **characterized in that** the at least one first heat exchanger (12) and/or the at least one second heat exchanger (21) are/is decoupled from the waste heat or residual heat of the combustion engine (1) when
- the heat accumulator (14) at a maximum temperature has reached its maximum pressure; and/or
- the heat accumulator (14) has reached its maximum filling quantity with the heat accumulator fluid; and/or
- the heat accumulator fluid circulated in the secondary circuit can no longer be condensed in the condenser (18) as a result of the heat removed there.

10. Method according to one of Claims 1 to 9, **characterized in that** the heat accumulator fluid fed in the vapour state (G) from the heat accumulator (14) into the secondary circuit is superheated as required upstream of the expansion machine (11), wherein the heat accumulator fluid is superheated as required in particular
- by means of at least one third heat exchanger which is fed with a waste heat flow from the combustion engine (1) as required, or
- by means of a burner (26) which is connected in particular to the fuel supply of the combustion engine (1).

11. Method according to Claim 10, **characterized in that** the first heat exchanger (12) and/or the second heat exchanger (21) and optionally the third heat exchanger are/is fed by an exhaust gas flow from the combustion engine (1).

12. Method according to one of Claims 1 to 11, **characterized in that** the quantity of heat accumulator fluid circulated in the primary circuit and in the secondary circuit is selected in such a manner that, at a maximum possible filling level of the heat accumulator fluid in the heat accumulator (14), at least 50%, in particular at least 70%, preferably at least 90%, of the volume available in the heat accumulator (14) is filled with the heat accumulator fluid which is in the liquid state (F).

13. Method according to one of Claims 1 to 12, **characterized in that**
- at least some of the mechanical energy obtained by means of the expansion machine (11), is output, in particular with the interconnection of a gearbox, to the drive train of the motor vehicle; and/or
- at least some of the mechanical energy obtained by means of the expansion machine (11) is output to a power generator (27) which is arranged downstream of the expansion machine (11) and the power thereof which is generated therefrom is fed into the power supply of the motor vehicle.

14. Device for recovering heat from a combustion engine (1), in particular of a motor vehicle, and for converting the recovered heat into mechanical energy by means of an expansion machine (11), in particular for carrying out a method according to one of Claims 1 to 13, with a primary circuit of a heat accumulator fluid, which primary circuit comprises at least one first heat exchanger (12) which is heated by the waste heat of a waste heat flow from the combustion engine (1), a heat accumulator (14) and a first annular line (13), connecting the first heat exchanger (12) to the heat accumulator (14), with at least one primary pump (16), and with a secondary circuit of the heat accumulator fluid, which secondary circuit is connected to the primary circuit and comprises the expansion machine (11), a condenser (18) arranged downstream thereof and a second annular line (17) with at least one secondary pump (20), **characterized in that** the primary circuit of the heat accumulator fluid is connected to the secondary circuit exclusively via the heat accumulator (14) and is otherwise separated from said secondary circuit.

15. Device according to Claim 14, **characterized in that** the heat accumulator (14) is designed as a pressure container, the internal pressure of which can be controlled and/or regulated
- by means of at least one pressure control and/or regulating valve (23, 24) arranged in the secondary circuit downstream of said heat accumulator; and/or
- by means of the pressure-controllable and/or regulable secondary pump arranged in the secondary circuit; and/or
- by means of a pressure control and/or regulation of the expansion machine (11), which controls and/or regulates the pressure decrease in the heat accumulator fluid passing therethrough.

16. Device according to Claim 14 or 15, **characterized in that** the expansion machine (11) arranged in the secondary circuit is connected to the heat accumulator (14) exclusively by means of the second annular line (17) .

17. Device according to one of Claims 14 to 16, **characterized in that** the secondary circuit comprises at least one second heat exchanger (21) which is heated by the waste heat from the combustion engine (1) and is arranged downstream of the condenser (18), wherein the at least one second heat exchanger (21) is arranged in particular in a residual heat flow of the combustion engine (1) downstream of the at least one first heat exchanger (12).

18. Device according to one of Claims 14 to 17, **characterized in that** the condenser (18) is supplied
- with ambient air;
- with a cooling medium from the combustion engine (1); or
- with another cooling medium circuit of a motor vehicle.

19. Device according to one of Claims 14 to 18, **characterized in that** the secondary circuit has a bypass line (17a) which is equipped with a shut-off valve, in particular in the form of a pressure control and/or regulating valve (24) and which bypasses the expansion machine (11) and connects the heat accumulator (14) directly to the condenser (18) via the second annular line (17) as required.

20. Device according to one of Claims 14 to 19, **characterized in that** the secondary circuit has a buffer container (19), which is arranged downstream of the condenser (18), for the heat accumulator fluid.

21. Device according to one of Claims 14 to 20, **characterized in that** the waste heat flow or residual heat flow of the combustion engine (1) can be separated by means of a branch (2a) provided with a valve
- from the at least one first heat exchanger (12) and/or
- from the at least one second heat exchanger (21) in order to bypass the first heat exchanger (12) and/or the second heat exchanger (21) as required.

22. Device according to one of Claims 14 to 21, **characterized in that** the secondary circuit downstream of the heat accumulator (14) and upstream of the expansion machine (11) has
- a third heat exchanger which is connectable to a waste heat flow of the combustion engine (1) as required, or
- a burner (26) which is connected in particular to the fuel supply of the combustion engine (1).

23. Device according to Claim 22, **characterized in that** the first heat exchanger (12) and/or the second heat exchanger (21) and optionally the third heat exchanger are fed by an exhaust gas flow from the combustion engine (1).

24. Device according to one of Claims 14 to 23, **characterized in that** the heat accumulator (14) is provided
- with thermal insulation, and/or
- with a multi-layered wall (15), in the intermediate space of which negative pressure or a vacuum prevails or an aerogel or a thermochemical storage medium is accommodated.

25. Device according to one of Claims 14 to 24, **characterized in that**
- the expansion machine (11) is connected, in particular with the interconnection of a gearbox, to the drive train of the motor vehicle, and/or
- the expansion machine (11) is connected to a power generator (27) which is arranged downstream thereof and is connected to the power supply of the motor vehicle.

## Revendications

1. Procédé de récupération de chaleur provenant d'un moteur à combustion interne (1), notamment d'un véhicule automobile, ainsi que de conversion de la chaleur récupérée en énergie mécanique au moyen d'une machine à expansion (11), un fluide d'accumulateur de chaleur amené à l'aide d'au moins une pompe principale (16) étant chauffé dans un circuit principal à l'aide d'au moins un premier échangeur thermique (12) grâce à la chaleur d'échappement du moteur à combustion interne (1), transféré dans un accumulateur de chaleur (14) et remis en circulation vers l'au moins un premier échangeur thermique (12) et le fluide d'accumulateur de chaleur étant en outre amené dans un circuit secondaire en ce qu'il est prélevé à l'état de vapeur (G) de l'accumulateur de chaleur (14) et amené à la machine à expansion (11), condensé en aval de la machine à expansion (11) à l'aide d'un condensateur (18) et remis en circulation dans l'accumulateur de chaleur (14) à l'aide d'au moins une pompe secondaire (20), **caractérisé en ce que** le circuit principal du fluide d'accumulateur de chaleur est uniquement relié au circuit secondaire via l'accumulateur de chaleur (14) et est séparé des éléments restants par celui-ci.

2. Procédé selon la revendication 1, **caractérisé en ce que** le fluide d'accumulateur de chaleur est maintenu au moins pour l'essentiel à l'état fluide (F) dans l'accumulateur de chaleur (14), de sorte que la majeure partie de la chaleur accumulée dans l'accumulateur de chaleur (14) est accumulée dans le fluide d'accumulateur de chaleur présent à l'état fluide (F) dans l'accumulateur de chaleur (14), le fluide d'accumulateur de chaleur étant maintenu dans l'accumulateur de chaleur (14), notamment au moins pour l'essentiel à l'état fluide **en ce que** l'accumulateur de chaleur (14) est maintenu à une pression à laquelle la majeure partie du fluide d'accumulateur de chaleur se trouve à l'état fluide (F) dans l'accumulateur de chaleur (14) :
- à l'aide d'au moins une soupape de régulation et/ou de commande de pression (23, 24) disposée en aval de l'accumulateur dans le circuit secondaire ; et/ou
- à l'aide de la pompe secondaire à régulation et/ou commande de pression réglable disposée dans le circuit secondaire ; et/ou
- à l'aide d'une commande et/ou régulation de pression de la machine à expansion (11) commandant et/ou régulant la baisse de pression du fluide d'accumulateur de chaleur la traversant.

3. Procédé selon la revendication 1 ou 2, **caractérisé en ce que** le fluide d'accumulateur de chaleur est maintenu dans l'accumulateur de chaleur (14) à la température respective régnant dans l'accumulateur de chaleur (14) pour l'essentiel dans un équilibre thermodynamique subcritique entre son état fluide (F) et son état de vapeur (G) selon une des isobares entre la ligne d'ébullition (ligne limite inférieure) et la ligne de rosée (ligne de limite supérieure), dans son diagramme température-entropie (diagramme T,s).

4. Procédé selon l'une quelconque des revendications 1 à 3, **caractérisé en ce que** la machine à expansion (11) est uniquement alimentée avec le fluide d'accumulateur de chaleur se trouvant à l'état de vapeur (G) provenant de l'accumulateur de chaleur (14).

5. Procédé selon l'une quelconque des revendications 1 à 4, **caractérisé en ce que** le fluide d'accumulateur de chaleur est chauffé dans le circuit secondaire, en aval du condensateur (18), à l'aide d'au moins un échangeur thermique (21), grâce à la chaleur d'échappement du moteur à combustion interne (1), avant d'être remis en circulation dans l'accumulateur de chaleur (14), le fluide d'accumulateur de chaleur étant chauffé dans le circuit secondaire, notamment à l'aide du deuxième échangeur thermique (21) au moins entraîné par la chaleur résiduelle du moteur à combustion interne (1) après que sa chaleur d'échappement ait été amenée au fluide d'accumulateur de chaleur amené dans le circuit principal à l'aide de l'au moins un premier échangeur thermique (12).

6. Procédé selon l'une quelconque des revendications 1 à 5, **caractérisé en ce que** pour condenser le fluide d'accumulateur de chaleur dans le circuit secondaire, le condensateur (18) est alimenté :
- en air ambiant ;
- avec un agent de refroidissement (25) du moteur à combustion interne (1) ; ou
- avec un autre circuit d'agent de refroidissement d'un véhicule automobile.

7. Procédé selon la revendication 6, **caractérisé en ce que** le condensateur (18) est alimenté avec un agent de refroidissement (25), notamment du moteur à combustion interne (1), l'agent de refroidissement (25) étant réchauffé si besoin par le fluide d'accumulateur de chaleur, notamment pendant les phases de réchauffement du moteur à combustion interne (1), sachant que pour réchauffer si nécessaire l'agent de refroidissement (25), l'agent d'accumulateur de chaleur est notamment directement amené au condensateur (18) dans le circuit secondaire via und conduite bipasse (17a) passant au niveau de la machine à expansion (11).

8. Procédé selon l'une quelconque des revendications 1 à 7, **caractérisé en ce que** le fluide d'accumulateur de chaleur condensé dans le circuit secondaire en aval du condensateur (18) est accumulé de façon temporaire dans un réservoir tampon (19) à partir duquel il est remis en circulation dans l'accumulateur de chaleur (14) à l'aide de la pompe secondaire (20).

9. Procédé selon la revendication 5 ou selon l'une quelconque des revendications 6 ou 7, selon la revendication 5, **caractérisé en ce que** l'au moins un premier échangeur thermique (12) et/ou l'au moins un deuxième échangeur thermique (21) est/sont découplé(s) de la chaleur d'échappement et/ou de la chaleur résiduelle du moteur à combustion interne (1) lorsque :
- l'accumulateur de chaleur (14) a atteint à une température maximale sa pression maximale ; et/ou
- l'accumulateur de chaleur (14) a atteint sa quantité de remplissage maximale en fluide d'accumulateur de chaleur ; et/ou
- le fluide d'accumulateur de chaleur circulant dans le circuit secondaire ne peut plus être condensé dans le condensateur (18) en raison de la chaleur y étant évacuée.

10. Procédé selon l'une quelconque des revendications 1 à 9, **caractérisé en ce que** le fluide d'accumulateur de chaleur sortant de l'accumulateur de chaleur (14) accumulé dans le circuit secondaire est surchauffé si besoin à l'état de vapeur (G) dans le circuit secondaire en amont de la machine à expansion (11), le fluide d'accumulateur de chaleur étant notamment surchauffé si besoin :
- à l'aide d'au moins un troisième échangeur thermique alimenté si besoin avec le flux de chaleur d'échappement du moteur à combustion interne (1) ; ou
- à l'aide d'un brûleur (26) notamment raccordé à l'alimentation en carburant du moteur à combustion interne (1).

11. Procédé selon la revendication 10, **caractérisé en ce que** le premier échangeur thermique (12) et/ou le deuxième échangeur thermique (21) et le cas échéant le troisième échangeur thermique est/sont alimenté(s) par un flux de gaz d'échappement du moteur à combustion interne (1).

12. Procédé selon l'une quelconque des revendications 1 à 11, **caractérisé en ce que** la quantité de fluide d'accumulateur de chaleur circulant dans le circuit principal et dans le circuit secondaire est choisie de telle sorte qu'en présence d'un état de remplissage maximal possible du fluide d'accumulateur de chaleur dans l'accumulateur de chaleur (14), au moins 50 %, notamment au moins 70 %, de préférence au moins 90 %, du volume mis à disposition dans l'accumulateur de chaleur (14) est rempli avec le fluide d'accumulateur de chaleur se trouvant à l'état fluide (F).

13. Procédé selon l'une quelconque des revendications 1 à 12, **caractérisé en ce que** :
- au moins une partie de l'énergie mécanique obtenue à l'aide de la machine à expansion (11) est restituée en intercalant notamment une boîte de vitesses au niveau de la chaîne cinématique du véhicule automobile ; et/ou
- au moins une partie de l'énergie mécanique obtenue à l'aide de la machine à expansion (11) est restituée à un générateur de courant (27) placé en aval de la machine à expansion (11) dont le courant ainsi produit est amené dans l'alimentation en courant du véhicule automobile.

14. Dispositif de récupération de chaleur provenant d'un moteur à combustion interne (1), notamment d'un véhicule automobile, ainsi que de conversion de la chaleur récupérée en énergie mécanique au moyen d'une machine à expansion (11), notamment en mettant en oeuvre un procédé selon l'une quelconque des revendications 1 à 13, avec un circuit principal de fluide d'accumulateur de chaleur comprenant au moins un premier échangeur thermique (12) chauffé grâce à la chaleur d'échappement d'un flux de chaleur d'échappement du moteur à combustion interne (1), un accumulateur de chaleur (14) et une première boucle (13) reliant le premier échangeur thermique (12) à l'accumulateur de chaleur (14) avec au moins une pompe principale (16) et avec un circuit secondaire du fluide d'accumulateur de chaleur relié au circuit principal et la machine à expansion (11) comprenant un condensateur (18) disposé en aval de ladite machine ainsi qu'une deuxième boucle (17) avec au moins une pompe secondaire (20), **caractérisé en ce que** le circuit principal du fluide d'accumulateur de chaleur est uniquement relié au circuit secondaire via l'accumulateur de chaleur (14) et est séparé des éléments restants par celui-ci.

15. Dispositif selon la revendication 14, **caractérisé en ce que** l'accumulateur de chaleur (14) est réalisé sous la forme d'un bac de pression dont la pression intérieure peut être commandée et/ou régulée :
- à l'aide d'au moins une soupape de régulation et/ou de commande de pression (23, 24) disposée en aval de l'accumulateur dans le circuit secondaire ; et/ou
- à l'aide de la pompe secondaire à régulation et/ou commande de pression réglable disposée dans le circuit secondaire ; et/ou
- à l'aide d'une commande et/ou régulation de pression de la machine à expansion (11) commandant et/ou régulant la baisse de pression du fluide d'accumulateur de chaleur la traversant.

16. Dispositif selon la revendication 14 ou 15, **caractérisé en ce que** la machine à expansion (11) disposée dans le circuit secondaire est uniquement reliée à l'accumulateur de chaleur (14) à l'aide de la deuxième boucle (17).

17. Dispositif selon l'une quelconque des revendications 14 à 16, **caractérisé en ce que** le circuit secondaire comprend au moins un deuxième échangeur thermique (21) chauffé grâce à la chaleur d'échappement du moteur à combustion interne (1) et disposé en aval du condensateur (18), l'au moins un deuxième échangeur thermique (21) étant disposé notamment dans un flux de chaleur résiduelle du moteur à combustion interne (1), en aval de l'au moins un premier échangeur thermique (12).

18. Dispositif selon l'une quelconque des revendications 14 à 17, **caractérisé en ce que** le condensateur (18) est alimenté :
- en air ambiant ;
- avec un agent de refroidissement du moteur à combustion interne (1) ; ou
- avec un autre circuit d'agent de refroidissement d'un véhicule automobile.

19. Dispositif selon l'une quelconque des revendications 14 à 18, **caractérisé en ce que** le circuit secondaire comporte une conduite bipasse (17a) équipée d'une soupape de verrouillage, notamment sous la forme d'une soupape de régulation et/ou de commande de pression (24) dérivant la machine à expansion (11) et reliant si besoin l'accumulateur de chaleur (14) directement au condensateur (18) via la deuxième boucle (17).

20. Dispositif selon l'une quelconque des revendications 14 à 19, **caractérisé en ce que** le circuit secondaire comporte un réservoir tampon (19) disposé en aval du condensateur (18) pour le fluide d'accumulateur de chaleur.

21. Dispositif selon l'une quelconque des revendications 14 à 20, **caractérisé en ce que** le flux de chaleur d'échappement et/ou de chaleur résiduelle du moteur à combustion interne (1) peut être séparé si besoin, à l'aide d'une bifurcation (2a) pourvue d'une soupape
- de l'au moins un premier échangeur thermique (12) ; et/ou
- de l'au moins un deuxième échangeur thermique (21), pour dériver si besoin le premier échangeur thermique (12) et/ou le deuxième échangeur thermique (21).

22. Dispositif selon l'une quelconque des revendications 14 à 21, **caractérisé en ce que** le circuit secondaire comporte, en aval de l'accumulateur de chaleur (14) et en amont de la machine à expansion (11) :
- un troisième échangeur thermique pouvant être raccordé si besoin à un flux de chaleur d'échappement du moteur à combustion interne (1) ; ou
- un brûleur (26) notamment raccordé à l'alimentation en carburant du moteur à combustion interne (1).

23. Dispositif selon la revendication 22, **caractérisé en ce que** le premier échangeur thermique (12) et/ou le deuxième échangeur thermique (21) et le cas échéant le troisième échangeur thermique sont alimentés par un flux de gaz d'échappement du moteur à combustion interne (1).

24. Dispositif selon l'une quelconque des revendications 14 à 23, **caractérisé en ce que** l'accumulateur de chaleur (14) est pourvu :
- d'un isolant thermique ; et/ou
- d'une paroi (15) à plusieurs couches dans l'espace intermédiaire duquel règne une sous-pression ou du vide ou recevant un aérogel ou un agent thermochimique d'accumulateur.

25. Dispositif selon l'une quelconque des revendications 14 à 24, **caractérisé en ce que** :
- la machine à expansion (11) est raccordée à la chaîne cinématique du véhicule automobile en intercalant notamment une boîte de vitesses ; et/ou
- la machine à expansion (11) est raccordée à un générateur de courant (27) placé en aval de ladite chaîne et relié à l'alimentation en courant du véhicule automobile.
